(19) Europäisches Patentamt / European Patent Office / Office européen des brevets

(11) **EP 1 653 499 B1**

(12) **EUROPEAN PATENT SPECIFICATION**

(45) Date of publication and mention
of the grant of the patent:
**04.05.2011 Bulletin 2011/18**

(21) Application number: **04771335.9**

(22) Date of filing: **06.08.2004**

(51) Int Cl.:
*H01J 65/00* (2006.01)    *H01J 61/30* (2006.01)
*C03C 3/064* (2006.01)    *C03C 3/066* (2006.01)
*C03C 3/068* (2006.01)    *C03C 3/11* (2006.01)
*C03C 3/097* (2006.01)    *C03C 3/095* (2006.01)
*C03C 3/091* (2006.01)    *C03C 3/093* (2006.01)

(86) International application number:
**PCT/JP2004/011335**

(87) International publication number:
**WO 2005/015606 (17.02.2005 Gazette 2005/07)**

(54) **GLASS TUBE FOR EXTERNAL ELECTRODE FLUORESCENT LAMP**

GLASRÖHRE FÜR EINE EXTERNELEKTRODEN-FLUORESZENZLAMPE

TUBE DE VERRE POUR LAMPE FLUORESCENTE A ELECTRODE EXTERIEURE

(84) Designated Contracting States:
**AT BE BG CH CY CZ DE DK EE ES FI FR GB GR HU IE IT LI LU MC NL PL PT RO SE SI SK TR**

(30) Priority: **08.08.2003 JP 2003206628**

(43) Date of publication of application:
**03.05.2006 Bulletin 2006/18**

(73) Proprietor: **NIPPON ELECTRIC GLASS CO., LTD Otsu-shi,
Shiga 520-8639 (JP)**

(72) Inventor: **Hikata, Hajime
Otsu-shi,
Shiga 5208639 (JP)**

(74) Representative: **Tetzner, Michael et al
Van-Gogh-Strasse 3
81479 München (DE)**

(56) References cited:
EP-A1- 0 316 089        JP-A- 6 016 452
JP-A- 7 089 743         JP-A- 11 086 797
JP-A- 11 217 236        JP-A- 48 025 713
JP-A- 59 099 653        JP-A- 2000 311 659
JP-A- 2001 106 546      JP-A- 2002 338 296
JP-A- 2004 203 659      US-A- 3 310 413
US-A- 3 903 353         US-A- 4 394 453
US-A1- 2002 117 959

• FEHLNER F P: "Thin films on glass for liquid crystal displays" JOURNAL OF NON-CRYSTALLINE SOLIDS, NORTH-HOLLAND PHYSICS PUBLISHING. AMSTERDAM, NL, vol. 218, 1 September 1997 (1997-09-01), pages 360-367, XP004095602 ISSN: 0022-3093
• HAHN L ET AL: "Werkstoffkunde fUEr die Elektrotechnik und Elektronik, PASSAGE" WERKSTOFFKUNDE FUER DIE ELEKTROTECHNIK UND ELEKTRONIK, XX, XX, 1 January 1983 (1983-01-01), pages 307-310, XP002213968

**Description**

**TECHNICAL FIELD**

The present invention relates to a glass envelope tube for an external electrode fluorescent lamp which serves as a light source for lighting devices such as a liquid crystal display element, and a process for producing a glass envelope tube.

**BACKGROUND ART**

Since the liquid crystal display element itself does not emit a light, it is generally accompanied by a specific illuminating device (hereinafter referred to as backlight unit) when in use for applications such as notebook-size personal computers, TV monitors, personal computer (PC) monitors and meters mounted in vehicles.

A cold-cathode fluorescent lamp, which is compact in size and long in service life, has been heretofore used as a light source for generally-used backlight units. A principle of its illumination is similar to that of general fluorescent lamps for lighting. That is, an electric power is supplied to internal electrodes through a dumet wire, kovar metal, tungsten metal or the like enclosed in a glass envelope to generate a discharge between the electrodes. This discharge between the electrodes excites mercury (Hg) or xenon (Xe) enclosed in the envelope, so that it emits anultraviolet radiation. The emitted ultraviolet radiation then induces a phosphor coated on an inner wall surface of the envelope to emit a visible light. To control a current amount in the fluorescent lamp while illumination, the cold-cathode unit includes an inverter for increasing a voltage of each lamp, a capacitor for controlling the flow of current, and the like.

With the recent increase in size of liquidcrystal display devices, there is an increasing trend of using plural cold-cathode tubes in the backlight unit to insure sufficient brightness. For example, TV monitors chiefly use a backlight unit having plural fluorescent lamps arranged on a back side of the liquid crystal display device at an equal interval of about 1 - 5 cm. The light emitted from the lamps is passed through a diffuser to obtain a homogeneous light. Since such a display device mounts power sources proportional in number to the lamps, the power sources occupy a larger volume of the device as the number of the lamps increases. This not only increases the price of the device but also results in the difficulty to reduce the size of the display device. It is accordingly expected to unify these power sources in the unit. However, the difficulty to omit the capacitor has prevented it.

Also, in the conventional cold-cathode lamp while lighting, a metal electrode reacts with Hg to produce an alloy and accordingly consumes Hg. Since Hg is a contributor to illumination, its consumption renders the cold-cathode lamp gradually darker and eventually unserviceable. As such, a service life of the cold-cathode lamp is limited and can not be admitted as being sufficiently long for a TV monitor.

Under these circumstances, an external electrode fluorescent lamp (EEFL) has been studied which excludes internal electrodes influential in service life but has electrodes placed on exterior surface end portions of the lamp envelope (for example, Patent Literature 1 and Non-Patent Literature 1).

As contrary to the cold-cathode lamp in which electrons are released directly from electrodes, the external electrode fluorescent lamp uses a power supply system in which a glass portion of the lamp envelope functions as a dielectric and its dielectric characteristics cause release of electrons from an interior surface of the envelope. That is, the lamp envelope is utilized to provide a substitute mechanism of the capacitor. As a consequence, the capacitor can be eliminated to permit integration of power sources. As similar in basic illumination principle to conventional fluorescent lamps, Hg or Xe is caused to produce an ultraviolet radiation which subsequently induces a phosphor to emit light.

    Patent Literature 1: Patent Laying-Open No. 2002-8408
    Non-Patent Literature 1: Journal of Lighting Society, vol.87, No.1, 2003, p 18

US 3, 903, 353 discloses a tubular glass conduit for containing and electrically insulating conductors in an underground power transmission network.

US 2002/0117959 refers to a gas-filled photoluminescent planar lamp with first and second opposing glass plates manufactured from a glass material and having a loss tangent of less than around 0.05%. Furthermore, first and second electrodes are disposed along an exterior surface of at least one of the first and second plates to create an electric field when electrical power is applied thereto whereby the electric field interacts with the gas contained within the chamber.

**DISCLOSURE OF THE INVENTION**

The following characteristics are required for the envelope for external electrode fluorescent lamp.

(1) Reduced dielectric loss

The dielectric loss indicates an energy loss of the capacitor. As it increases, more energy is lost and released in the form of heat. As a result, the dielectric (envelope) itself generates heat. Generation of heat energy reduces the efficiency of the lamp and is not favored from an environmental point of view.

A conventional fluorescent lamp somewhat increases its temperature by an internal loss. It is widely known that the lamp while driven is elevated to a temperature higher than a room temperature. Meanwhile, in the case where the external electrode fluorescent lamp is driven, if a temperature of the envelope rises, the glass constituting the envelope increases its dielectric loss and itself starts to generate heat. This heat generation further increases the dielectric loss of the glass, so that a situation may be locked in a vicious cycle. As a result, a fire risk of the surrounding members arises. In particular, the backlight unit in a liquid crystal display is enclosed by a reflector plate and a liquid crystal panel and thus hard to dissipate the generated heat, so that it tends to elevate a surrounding temperature of the lamp. Hence, heat dissipation must be taken into consideration. This may bring a need of a device for heat dissipation or prevent increase of a lamp output. As a result, various restrictions emerge when the external electrode fluorescent lamp is used as a light source for large-size liquid crystal display devices.

(2) Uniform dielectric capacity (electrostatic capacity)

The external electrode fluorescent lamp uses a glass envelope as a dielectric. From this character, a thickness of the dielectric that determines an electric energy input to the lamp, that is, a wall thickness of the envelope is a very important factor in determining performance characteristics of the lamp.

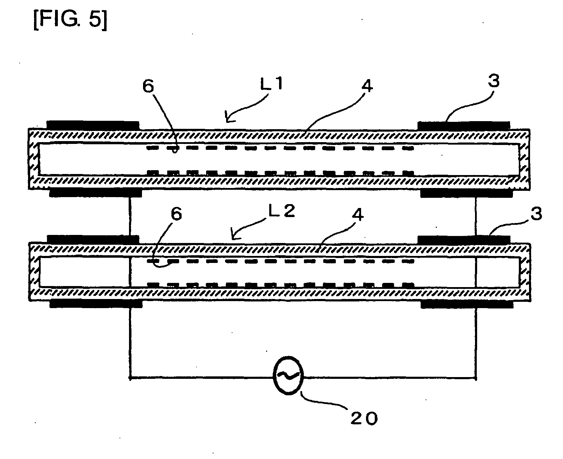

As described above, the external electrode fluorescent lamp excludes an internal electrode but has such a structure that electrodes are placed on an exterior surface of the lamp envelope. When plural lamps L1, L2 are connected to a single power source 20, as shown in Figure 5, voltages across both lamps are the same. The external electrode fluorescent lamp has a substitute mechanism of the capacitor, in which a glass wall thickness, external electrode and Hg or Xe vapor within the lamp constitute a dielectric, one electrode and another electrode, respectively. An electric power is supplied to the lamp by driving this substitute mechanism of the capacitor using an alternating-current power source. The brightness of the lamp is determined by an electric energy. The electric energy (charge) of the capacitor is calculated from an electrostatic capacity and a voltage (described below).

$$Q = C \times V$$

[Q: charge, C: electrostatic capacity, V: terminal voltage]

Since voltages across the lamps are the same, it may safely be said that the electrostatic capacity determines the electric energy. The electrostatic capacity is a product of a dielectric constant, an area and a reciprocal of a thickness (as defined by the following equation).

$$C = \varepsilon \times S \times (1/d)$$

[C: electrostatic capacity, E: dielectric constant of a dielectric, S: electrode area, d: thickness of the dielectric]

Since the dielectric constant of the dielectric is determined by a glass composition, the envelopes composed of the same material show the same dielectric constant value. Since the lamps have the same electrode area, the dielectric thickness (= envelope wall thickness) substantially determines the electrostatic capacity. As the envelope wall thickness becomes smaller, the charge amount increases to result in increasing brightness of the lamp. On the other hand, as the envelope wall thickness becomes larger, the charge amount decreases to result in reducing brightness of the lamp. In order to minimize a difference in brightness between lamps such as in a backlight unit constructed to include plural lamps connected to a single power source, it is very important that those lamps have a uniform envelope wall thickness.

However, current external electrode fluorescent lamps simply employ envelopes which have been used in conventional fluorescent lamps. Therefore, the aforestated characteristic requirements have not been taken into sufficient consideration.

It is an object of the present invention to provide a glass envelope tube for an external electrode fluorescent lamp, which shows a low dielectric loss and a uniform dielectric capacity. It is a further object of the present invention to provide a process for producing such a glass envelope tube.

As a result of extensive studies, the inventor of this application has found that the above objects can be achieved by fabricating the glass envelope tube using a glass having the reduced dielectric loss tangent and improved formability and now proposes it as the present invention. This objects can be achieved by the features of product claims 1 and 2 and by the features of process claims 12 and 13.

The glass envelope tube of the present invention is useful for fabrication of an external electrode fluorescent lamp of a structure that includes an electrode on its exterior surface, and comprises a glass which shows a dielectric loss tangent of 0.02 or below at 40 KHz at 250 °C and a strain point of not higher than 650 °C. Furthermore, the glass has an infrared transmittance coefficient (X) of 0.1 - 0.8, when defined by the following equation;

$$X = (\log(a/b))/t$$

a: transmittance (%) at 3, 840 cm$^{-1}$

b: transmittance (%) at a minimum point near 3,560 cm$^{-1}$

t: measured thickness (mm) of a sample.

The glass envelope tube, as used in the present invention, serves as a member for defining a discharge space in the fluorescent lamp.

Because of a low dielectric loss, the glass envelope tube for an external electrode fluorescent lamp, in accordance with the present invention, provides a good lamp efficiency and retards a temperature rise of the lamp. Hence, even if an external electrode fluorescent lamp fabricated using the glass envelope tube of the present invention is applied to a large-size liquid crystal display device requiring plural lamps, one needs not install a dissipation device or restrict a lamp output.

Also because the glass envelope tube of the present invention is made using the glass excellent in formability, it readily has a uniform wall thickness to assure uniformity in dielectric capacity of each lamp. Therefore, even if an external electrode fluorescent lamp using the glass envelope tube of the present invention is applied in plurality to a large-size liquid crystal display device, little difference in brightness between the lamps assures display uniformity.

Also because the glass envelope tube is made using the glass excellent in formability, it has a high roundness and is little bent. Generally, fluorescent lamps for use in the backlight unit or the like have such small diameters that make it difficult to coat a phosphor thereon. Accordingly, the lower roundness of the tube increases the occurrence of uneven coating of the phosphor. Because the tube is long for its diameter, even a small bend is highlighted. However, the envelope of the present invention has a high roundness and excludes a bend, so it is effective to prevent occurrence of the above-described problems.

**BRIEF DESCRIPTION OF THE DRAWINGS**

[Figure 1] Figure 1 shows views for explaining a sample measured for dielectric characteristics, of which (a) is a side view and (b) is a bottom view of the sample.

[Figure 2] Figure 2 is a view which explains an apparatus for measurement of dielectric characteristics.

[Figure 3] Figure 3 shows views which explain procedures for manufacturing a first embodiment of a fluorescent lamp.

[Figure 4] Figure 4 shows views which explain procedures for manufacturing a second embodiment of a fluorescent lamp.

[Figure 5] Figure 5 is a view which explains a usage of an external electrode fluorescent lamp.

**EXPLANATION OF REFERENCE NUMERALS**

| 1 | sealing member |
|---|---|
| 2 | sealed glass tablet |
| 3 | electrode |
| 4 | envelope |
| 5 | exhaust tube |
| 6 | phosphor |
| 7 | mercury amalgam boat |
| 10 | carbon mold |
| 11 | exhaust system |
| 20 | power source |
| L1, L2 | external electrode fluorescent lamp |

**BEST MODE FOR CARRYING OUT THE INVENTION**

The envelope for an external electrode fluorescent lamp, in accordance with the present invention, comprises a glass having a low dielectric loss tangent.

The dielectric loss, which affects heat generation of a glass, is proportional to a product of a dielectric loss tangent, voltage, dielectric constant and frequency. The voltage and frequency of the power remain constant under given power conditions. The dielectric constant depends on a basic composition and is hard to vary largely. As a consequence, the dielectric loss tangent becomes an important determining factor of the dielectric loss. At about 100 kHz or below, which is a frequency range used in fluorescent lamps, the dielectric loss tangent is largely governed by the influence of ionic conduction of the glass. Ionic conduction of the glass tends to show a rapid increase as a temperature rises. Accordingly, the dielectric loss tangent increases with a temperature rise.

The dielectric loss tangent of the glass constituting the envelope is now described in detail.

The fluorescent lamp is used at 40 KHz - 100 KHz and its dielectric loss tangent tends to decrease with an increasing frequency. That is, its dielectric loss tangent is higher at 40 KHz than at 100 KHz. Hence, the dielectric characteristics can be prescribed by values at 40 KHz. The dielectric loss tangent values at 150 °C, 250 °C and 350 °C are listedbelow. Here, 150°C corresponds to a normal operating temperature of the lamp, 250 °C to a possible interior temperature of the lamp and 350 °C to a temperature which must be taken into consideration from a safety side. In the present invention, a value at 250°C, believed to be a maximum temperature for the fluorescent lamp, is recognized as being most important and this value is highly regarded.

The dielectric loss tangent value at 150 °C at 40 kHz is preferably 0.005 or below, particularly 0.004 or below, more preferably 0.003 or below. If the dielectric loss tangent value is 0 . 005 or below, the dielectric loss decreases to such an extent as to permit suppression of a heat generation quantity to such a level that creates no practical problems. The value, if 0.004 or below, permits use of lamps with higher operating temperatures. If the value is 0.003 or below, even a high-output fluorescent lamp shows reduced heat generation, which is preferable.

The electric loss tangent value at 250 °C at 40 kHz is 0.02 or below, preferably 0.015 or below, more preferably 0.01 or below. If the dielectric loss tangent value is 0.02 or below, the dielectric loss decreases to such an extent as to permit reduction of a heat generation quantity to a level that creates no practical problems. The dielectric loss tangent value, if 0.015 or below, permits use of lamps with higher operating temperatures and, if 0.01 or below, even permits use of high-output fluorescent lamps known as a high-heat-generation type, which is preferable.

The dielectric loss tangent value at 350 °C at 40 kHz is 0.1 or below, particularly 0.07 or below, more preferably 0.05 or below. If the dielectric loss tangent value is 0.1 or below, the dielectric loss decreases to such an extent as to permit reduction of a heat generation quantity to a level that creates no practical problems. The dielectric loss tangent value, if 0.07 or below, permits use of lamps with higher operating temperatures and, if 0.05 or below, permits use of high-output fluorescent lamps even under the circumstances where a surrounding temperature is high and heat dissipation is hindered, which is preferable.

Also, dielectric characteristics at 1 MHz of a material represent its nature. In the present invention, a glass is preferably used which shows a dielectric loss tangent at 1 MHz at room temperature of 0.003 or below, particularly 0.0025 or below, more preferably 0.002 or below. If the dielectric loss tangent value is 0.003 or below, the dielectric loss decreases to such an extent as to permit reduction of a heat generation quantity to a level that creates no practical problems. The dielectric loss tangent value, if 0.0025 or below, permits use of lamps with higher operating temperatures. If the dielectric loss tangent value is 0.002 or below, even high-output or high-frequency type lamps show reduced heat generation, which is preferable.

It is also desirable that a dielectric loss tangent change, as defined by the below-given equation, is 0.0002 or below, preferably 0.0001 or below, more preferably 0.00008 or below, on average over the 150 °C - 250 °C range. If it is 0.0002 or below, a heat generation quantity of a lamp shows little change even if a surrounding temperature rises, so that a lamp can be used at a stable temperature. If it is 0.0001 or below, a lamp is little affected by the surrounding circumstances. If it is 0.00008 or below, a heat generation quantity decreases, which is ideal from an environmental point of view.

It is also desirable that a dielectric loss tangent change, as defined by the below-given equation, is 0.001 or below, preferably 0.0007 or below, more preferably 0.0005 or below, on average over the 250°C - 350 °C range. If it is 0.001 or below, abnormal heat generation can be restrained which may occurs when a dielectric loss increases with a temperature rise, so that the envelope can be prevented from being subjected to a fire damage. If it is 0.0007 or below, the envelope can be prevented from being subjected to a fire damage even under the conditions that limit heat dissipation from a lamp. More ideally, it is 0.0005 or below. If so, a lamp temperature can be further stabilized.

$$\text{Dielectric loss tangent change} = \Delta \text{ dielectric loss tangent}$$

$$/ \Delta T$$

[$\Delta$ dielectric loss tangent: difference in dielectric loss tangent, $\Delta T$: difference between temperatures at which dielectric characteristics are measured]

To reduce a dielectric loss tangent of a glass, a composition of the glass may be adjusted such that its ionic conduction is reduced. Specifically, an amount of an alkaline component may be reduced, or alternatively, an alkaline content may be adjusted. The composition canal so be adjusted by reducing a water content. An aluminoborosilicate glass, either low-alkali or alkali-free, has a low dielectric loss tangent. Hence, this kind of glass is preferably used to fabricate the envelope.

The glass used to constitute the envelope of the present invention for an external electrode fluorescent lamp is well formable and can be formed with precision into a tubular shape.

The formability of a glass depends on whether it has viscosity characteristics suitable for the particular forming process. For example, glasses suitable for tube forming are generally formed by a tube drawing method such as a Danner method, down-draw method or up-draw method. Glasses suitable for sheet forming are formed by a sheet drawing method such as an overflow method, float method, slot down method or roll out method. Accordingly, the glasses preferably show a broad (long) viscosity change with temperature, in the forming temperature range. Particularly as in the case of the present invention, when glasses are applied to an envelope for an external electrode fluorescent lamp useful as a lighting device for a liquid crystal display element, the glasses such as in the form of a tube have a thin wall and a small diameter. Also, severe restrictions are placed on their roundness, inner-outer diameter eccentricity and wall thickness variation. Therefore, if the glasses are to be formed with precision, they must show a sufficiently broad viscosity change with temperature.

For the reason described above, a strain point at which a glass almost solidifies is taken as a measure in the present invention. A higher strain point increases a difference in temperature from an actual forming temperature, resulting in a so-called long glass. Specifically, a glass is used which has a strain point of 650 °C or below, preferably 600 °C or below. The strainpointof 650°C orbelowprevents sharp viscosity change of a glass, rendering it easier to obtain viscosity characteristics suitable for tube drawing. Further with the strain point of 600 °C or below, a processing temperature of a glass can be lowered.

For the same reason, it is desirable that a difference between a strain point and a temperature corresponding to $10^4$ dPa·S is 400 °C or above, 450 °C or above, particularly 500 °C or above, further 570 °C or above. The temperature difference, if 400 °C or above, enables one to obtain a glass tube with a high dimensional accuracy and, if 500 °C or above, allows one to readily obtain a glass tube with a high dimensional accuracy. If the strain point is 570 °C or above, a forming speed can be increased while maintaining a high dimensional accuracy.

On the other hand, the higher forming temperature undesirably raises a need of a special heat-resisting brick and increases an amount of energy used, which is not desirable from an environmental point of view. It is accordingly desirable that a temperature corresponding to a viscosity ($10^3$ dPa·S) at a start of tube drawing does not exceed 1,400 °C. It is similarly desirable that a temperature corresponding to a processing viscosity ($10^4$ dPa·S) of a lamp does not exceed 1,200 °C.

Crystal formation during forming makes it difficult to obtain a glass tube with a high dimensional accuracy. A liquidus viscosity of a glass indicates the tendency of crystal formation. It may be safely said that a glass with the higher liquidus viscosity value, even if highly viscous, shows the reduced occurrence of crystal formation. In the present invention, it is desirable that a glass has a liquidus viscosity of $10^4$ dPa·S or above, particularly $10^{4.5}$ dPa·S or above, further preferably $10^5$ dPa·S or above. If $10^4$ dPa·S or above, a glass can be subj ected to a tube drawing process without problem. If $10^{4.5}$ dPa·S or above, an improvement in mass productivity of a glass can be expected. If $10^5$ dPa·S or above, a glass tube with a high dimensional accuracy can be fabricated efficiently without a particular attention to a forming facility.

The viscosity characteristics of a glass can be rendered long by increasing a content of an alkali component, such as $Li_2O$, $Na_2O$ or $K_2O$, or $B_2O_3$, decreasing an amount of $SiO_2$ or $Al_2O_3$, or increasing a water content. Also, the liquidus viscosity of a glass can be increased by suitably adjusting respective contents as well as a blending proportion of an alkaline-earth component such as MgO, CaO, SrO or BaO, ZnO, $Al_2O_3$ and the like.

A water content of a glass acts to bring down a low temperature viscosity of the glass and thereby improve a processability of a lamp. However, the higher water content disadvantageously increases a dielectric loss tangent. Also, if it is released in the form of a gas within a lamp, a luminance of the lamp drops. It may also cause a bubble defect.

For the reasons described above, the water content is preferably controlled at an appropriate level. Specifically, the preceding problems hardly arise if a coefficient X, when calculated from the below-given equation, does not exceed 0.8. A glass can be readily formed with precision, if this coefficient is 0.1 or above. The coefficient X is preferably in the range of 0.15 - 0.6, particularly preferably in the range of 0.2 - 0.5.

The water content is proportional to the infrared transmittance coefficient (X) given by the following equation.

$$X = (log(a/b))/t$$

a: transmittance (%) at 3,840 cm$^{-1}$

b: transmittance (%) at a minimum point near 3,560 cm$^{-1}$

t: measured thickness (mm) of a sample

However, a shape of the envelope in some cases hinders direct measurement of the infrared transmittance coefficient. For example, in case of a tubular shape, direct measurement of the infrared transmittance coefficient is hindered. In such a case, an envelope is laid on a platinum plate and then placed for 5 minutes in an electric furnace controlled at a temperature corresponding to a viscosity (dPa·S) of 5.0 $\pm$ 0.5, in a logarithmic expression, for a glass to be measured, during which time the envelope melts. The resulting glass block is mirror polished to a thickness of 1 mm and then evaluated. If a measurement sample is prepared according to the above procedure, a loss of a water content during preparation of the sample can be minimized. Therefore, the resulting infrared transmittance coefficient can be regarded as the coefficient X of the glass prior to sample preparation.

In general, adjustment of a water content of a glass can be made by utilizing a water content of a combustion gas produced while the glass is melted, and a raw material (blending proportion of boric acid and anhydrous borate) for the glass. If they are insufficient for adjustment, a water content of a glass can be adjusted, for example, by bubbling a dry air through the glass while melted.

Besides the preceding characteristic requirements, the envelope for use in an external electrode fluorescent lamp is further expected to satisfy the following characteristics.

(3) Exclusion of bubbles

If a bubble resides in an envelope which is a dielectric portion, a charge is accumulated on an electrode side of a bubble. This causes a microscopic discharge phenomenon, called tree, which may locally heat the envelope to such high temperatures that the glass is cause tomelt. As a result, an airtight property of the envelope may be impaired to the extent that cause the lamp to stop emitting light. Accordingly, a smaller number of bubbles must reside in an envelope for an external electrode fluorescent lamp than in those for conventional fluorescent lamps. The permissible number of bubbles is 200 bubbles/100 g or less for conventional fluorescent lamp envelopes. However, for an envelope for an external electrode fluorescent lamp which is used as a lighting means of a liquid crystal display device, the permissible number of bubbles may be 10 bubbles/100 g or less, more preferably 1 bubble/100 g or less.

(4) Improved ultraviolet shielding ability

In a backlight unit of a liquid crystal display device, an organic member such as a reflector is located in a position close to a fluorescent lamp. This creates a possibility that its light quantity may decrease when the organic member degrades upon exposure to an ultraviolet radiation. It is accordingly required that an envelope should be made from a glass having a high ultraviolet shielding ability to prevent leakage of an ultraviolet emission from an interior of the fluorescent lamp.

(5) Improved solarization resistance

A glass is colored when exposed to an ultraviolet radiation, called solarization. Coloration of a glass constituting an envelope decreases a light quantity of a lamp, which is not desirable. It is therefore necessary to use a glass having a high solarization resistance.

(6) Improved resistance to deflection

A tubular fluorescent lamp for use in a backlight unit has a small diameter but a large length. Accordingly, when fixed at both ends, a central portion of the lamp tends to deflect downward by its own weight. Downward deflection of the lamp causes interference fringes of the backlight unit, which is not desirable. A box-shaped fluorescent lamp for use in a backlight unit is thin-wall and flat. Its central portion also tends to deflect downward. When this type of lamp deflects, a discharge space changes in volume to result in non-uniform light emission. It is accordingly desirable that an envelope is made from a glass having a lowest possible density and a high Young's modulus.

A material of an envelope may be suitably chosen from useful glasses under consideration of the preceding various conditions. Examples of useful glasses include an aluminoborosilicate glass having a composition comprising, by mass percent,

$SiO_2$ 35 - 65 %,

$B_2O_3$ 0.1 - 25 %,

$Al_2O_3$ 2 - 20 % and

$Li_2O + Na_2O + K_2O$ 0.1 - 5 %;

particularly an aluminoborosilicate glass containing, by mass percent,

$SiO_2$ 35 - 65 %,
$B_2O_3$ 0.1 - 25 %,
$Al_2O_3$ 2 - 20 %,
$Li_2O$ 0 - 5 %,
$Na_2O$ 0 - 5 %,
$K_2O$ 0 - 5 %,
$Li_2O + Na_2O + K_2O$ 0.1 - 5 %,
$MgO$ 0 - 20 %,
$CaO$ 0 - 20 %,
$SrO$ 0 - 30 %,
$BaO$ 0 - 30 %,
$MgO + CaO + SrO + BaO$ 3 - 45 %,
$ZnO$ 0 - 25 %,
$TiO_2$ 0 - 15 %,
$WO_3$ 0 - 15 %,
$CeO_2$ 0 - 5 %,
$TiO_2 + WO_3 + CeO_2$ 0.1 - 15 %,
$ZrO_2$ 0 - 9 %,
$SnO_2$ 0 - 10 %,
$Nb_2O_5$ 0 - 15 %,
$Ta_2O_5$ 0 - 15 %,
$P_2O_5$ 0 - 10 %,
$Bi_2O_3$ 0 - 30 %,
$Cl_2$ 0 - 0.5 % and
$Sb_2O_3$ 0 - 1 %; and an aluminoborosilicate glass having a composition comprising, by mass percent,
$SiO_2$ 35 - 65 %,
$B_2O_3$ 0.1 - 25 %,
$Al_2O_3$ 2 - 12.5 % and
$Li_2O + Na_2O + K_2O$ 0 - below 0.1 %;
particularly an aluminoborosilicate glass containing, by mass percent,
$SiO_2$ 35 - 65 %,
$B_2O_3$ 0.1 - 25 %,
$Al_2O_3$ 2 - 12.5 %,
$Li_2O$ 0 - below 0.1 %,
$Na_2O$ 0 - below 0.1 %,
$K_2O$ 0 - below 0.1 %,
$Li_2O + Na_2O + K_2O$ 0 - below 0.1 %,
$MgO$ 0 - 20 %,
$CaO$ 0 - 20 %,
$SrO$ 0 - 30 %,
$BaO$ 0 - 30 %,
$MgO + CaO + SrO + BaO$ 3 - 45 %,
$ZnO$ 0 - 25 %,
$TiO_2$ 0 - 15 %,
$WO_3$ 0 - 15 %,
$CeO_2$ 0 - 5 %,
$TiO_2 + WO_3 + CeO_2$ 0.1 - 15 %,
$ZrO_2$ 0 - 9 %,
$SnO_2$ 0 - 10 %,
$Nb_2O_5$ 0 - 15 %,
$Ta_2O_5$ 0 - 15 %,
$P_2O_5$ 0 - 10 %,
$Bi_2O_3$ 0 - 30 %,
$Cl_2$ 0 - 0.5 % and
$Sb_2O_3$ 0 - 1 %. The reason for the specified range of each component in the above compositions is described below.

$SiO_2$ is a main component essential to constitution of a glass network former. As its content increases, a chemical durability of the glass increases. On the other hand, it also tends to increase a viscosity. Accordingly, an excessively large content thereof results in the difficulty to obtain a long glass. The $SiO_2$ content is 35 % or above, preferably 40 % or above, but 65% or below, preferably 60% or below, more preferably 54 % or below, further preferably 50% or below. The $SiO_2$ content, if 40 % or above, assures a usable level of chemical durability and, if 35 % or above, enhances a chemical durability to a level sufficient to prevent occurrence of staining or the like on a glass surface, thereby enabling fabrication of a fluorescent lamp which maintains a luminance over an extended period of time. On the other hand, the $SiO_2$ content, if 65 % or below, shortens a time required to melt a silica material to assure satisfactory productivity and, if 60 % or below, lowers a viscosity of a glass. In case the $SiO_2$ content is 54 % or below, even if an alkali content is below 0.1 %, it becomes easy to obtain a glass viscosity suitable for forming. The glass viscosity further decreases particularly when the $SiO_2$ content is below 50 %, making it possible to readily obtain a glass with high dimensional accuracy.

$B_2O_3$ is a component needed to improve meltability and lower a viscosity. As its content increases, a glass viscosity decreases. On the other hand, it tends to deteriorate chemical durability. Its content is 0.1 % or above, preferably 6 % or above, more preferably 7 % or above, further preferably 10 % or above, but is 25 % or below, preferably 20 % or below, more preferably 16 % or below. If the $B_2O_3$ content is 0.1 % or above, the above-described effect results. In order to obtain a more practical viscosity, it is preferred that the $B_2O_3$ content is 5 % or above. In the case the $B_2O_3$ content is 6 % or above, even if an alkali content is below 0.1 %, it becomes easy to design a composition which has a strain point of 650 °C and shows a viscosity of $10^3$ dPa·S at a temperature of 1,400 °C or below. If the $B_2O_3$ content is 10 % or above, the strain point further drops and a difference from a temperature corresponding to a viscosity of $10^4$ dPa·S tends to become larger, so that a long glass can be readily produced. On the other hand, the $B_2O_3$ content, if 25 % or below, assures a practically usable level of chemical durability and, if 20 % or below, further improves a chemical durability and, if 16 % or below, prevents occurrence of staining or the like on a glass surface, thereby enabling fabrication of a fluorescent lamp which maintains a luminance over an extended period of time.

$Al_2O_3$ is an essential component which provides a marked improvement in stability of a glass. At the same time, it is a component which increases a Young's modulus. On the other hand, it has a tendency to increase a viscosity. Accordingly, the excessive large content thereof results in the difficulty to obtain a long glass. The $Al_2O_3$ content is 2 % or above, preferably 3 % or above, more preferably 5 % or above, further preferably 7 % or above, but is 20 % or below, preferably 15 % or below, more preferably 12.5 % or below. The $Al_2O_3$ content, if 2 % or above, provides a glass stabilizing effect and, if 5 % or above, restrains crystal formation to result in a composition suitable for fabrication of a glass tube with high dimensional accuracy and, if 7 % or above, results in a marked improvement in stability of a glass. In order to obtains a glass having a high Young's modulus, it is preferred that the $Al_2O_3$ content is 10 % or above. On the other hand, the $Al_2O_3$ content, if 20 % or below, prevents excessive increase in viscosity of a glass melt and, if 15 % or below, makes it easy to achieve reconcilement of a low viscosity and a stability of a glass. In the case the $Al_2O_3$ content is 2.5 % or below, even if an alkali content is below 0.1 %, reconcilement of a viscosity suitable for processing and a stability of a glass can be achieved.

The total content of the alkali metal oxides $Li_2O$, $Na_2O$ and $K_2O$ is 0 - 5 %. These alkali metal oxides serve as a flux to promote the melting of a raw material for glass and thus facilitates melting of a glass. If the total content of these components is 0.01 % or above, a glass solubility improving effect can be expected. It also lowers a viscosity of a glass so that its viscosity characteristic is rendered long, as well as improving stability of the glass. A further effect is provided whereby an electric resistance drops to facilitate electric melting. On the other hand, these components increase a dielectric loss tangent of a glass. Accordingly, a sufficient care must be provided in determining the content thereof. When these alkali metal oxides are used to decrease in viscosity of a glass, the total content thereof is 0.1 - 5 %, preferably 1 - 4 %, more preferably 2 - 4 %. If the total content of these components is 1 % or above, it becomes possible to provide an improvement in viscosity characteristics of a glass. If these components are contained in the total amount of 1 % or more, a sufficient effect is obtained whereby a viscosity of a glass is lowered. This content also promotes the melting of a glass and is thus preferred in terms of energy efficiency. If they are contained in the total amount of 2 % or more, an electric resistance of the glass reaches a value suited to electric melting. If electric melting is adopted, a use amount of a fuel responsible for $SO_3$ inclusion can be reduced. This is preferred as a measure to reduce bubbles. So long as the total content of those alkali components does not exceed 5 %, an increase in dielectric loss tangent of a glass is limited so that heat generation of the glass can be suppressed at such a level that creates no practical problems. It is however recommended that the total content thereof is maintained not to exceed 4 %, if possible.

As to the respective contents of $Li_2O$, $Na_2O$ and $K_2O$, 0 - 5 % (particularly 0 - 4 %) $Li_2O$, 0 - 5 % (particularly 0.01 - 4 % , more preferably 0.1 - 4 %) $Na_2O$ and 0 - 5 % (particularly 0.01 - 4, more preferably 0.1 - 4 % , most preferably 1 - 4 %) $K_2O$ are desirable. So long as a content of each alkali component is less than 5 %, an excessive increase of dielectric loss tangent is prevented so that heat generation of a glass can be suppressed at such a level that creates no practical problems. $K_2O$ increases a smaller degree of dielectric loss tangent, compared to the other alkali components. Accordingly, its preferential use is recommended. $Na_2O$ may be used alone, preferably in combination with $K_2O$. When $Na_2$ and $K_2O$ are used in combination, their contents are adjusted such that $Na_2O/K_2O$, in a molar ratio, is preferably 0.2 - 0.8. So long as it is maintained within this range, improvement of meltability and reduction in viscosity of a glass can be readily achieved while effectively suppressing increase of dielectric loss tangent by an effect of mixing alkalis.

In order to render a glass long and more formable, the $Al_2O_3$ content may be limited to the range of 2 - 12.5 % (more preferably, the $SiO_2$ content is limited to 5 - 54 % and/or the $B_2O_3$ content is limited to 6 - 25 %). In such a case, the total content of the alkali metal oxides may be adjusted to 0 - below 0.1 % (0 - below 0.1 % $Li_2O$, 0 - below 0.1 % $Na_2O$, and 0 - below 0.1 % $K_2O$). This adjustment is expected to result in obtaining a further low dielectric loss tangent. More preferably, the total content of the alkali metal oxides is in the range of 0.01 - below 0.1 %.

MgO, CaO, SrO and BaO, which are all alkaline-earth components, stabilize a glass and thereby prevent formation of crystals in the glass. They also restrain movement of alkalis in the glass and effectively suppress increase of a dielectric loss tangent. On the other hand, they likely react with refractories or the like in a glass forming apparatus to form alkaline-earth feldspar crystals. Their total content is 3 - 45 %, preferably 5 - 35 %, more preferably 10 - 25 %. If it is 3 % or above, their effect becomes noticeable to prevent movement of alkalis. If it is 5 % or above, they become significantly effective to prevent formation of crystals. If it is 10 % or above, they become effective to reduce a relative amount of $SiO_2$ and, as a result, lower a viscosity of a glass. On the other hand, if it is 45 % or below, formation of alkaline-earth feldspar crystals can be restrained. If it is 35 % or below, especially 25 % or below, formation of alkaline-earth feldspar crystals is made extremely difficult, so that restrictions such as on the forming apparatus are lessened. In order to reduce a density of a glass, SrO or CaO rather than BaO may be used, for example.

In addition to the above-described characteristics, MgO is also effective in increasing a Young's modulus of a glass. However, when combined with some other components, it readily forms a Mg-based crystals. Its content is 0 - 20 %, preferably 0 - 5 %, more preferably 0 - 2.5 %. If it is 20 % or below, deposition of Mg-based crystals can be restrained. If it is 5 % or below, deposition of Mg-based crystals during forming of a glass is made difficult. If it is 2.5 % or below, deposition of Mg-based crystals is made extremely difficult. This increases options in selecting other components for use in combination with MgO, which is preferable.

CaO is a component similar to MgO. However, it is less reactive with refractories or the like than MgO. Its content is 0 - 20 %, preferably 0.1 - 10 %, more preferably 1 - 8 %, further preferably 1 - 5 %. If the CaO content is 0.1 % or above, its glass stabilizing effect becomes noticeable. If it is 1 % or above, a glass is further stabilized. On the other hand, if it is 20 % or below, deposition of Ca-based crystals can be restrained, making it easy to obtain a glass tube with high roundness. If it is 10 % or below, particularly 8 % or below, deposition of Ca-based crystals is made extremely difficult. More preferably, it is 5 % or below.

The SrO content is 0 - 30 %, preferably 0.1 - 25 %, more preferably 3 - 20 %, further preferably 7 - 20 %. If the SrO content is 0.1 % or above, its glass stabilizing effect becomes noticeable. This effect becomes more significant if it is 3 % or above. If it is 7 % or above, SrO becomes effective to reduce a relative amount of $SiO_2$ and, as a result, lower a viscosity of a glass. On the other hand, if it is 30 % or below, deposition of Sr-based crystals can be restrained, making it easy to obtain a glass tube with high roundness. If it is 25 % or below, particularly 20 % or below, deposition of Sr-based crystals is made more difficult.

The BaO content is 0 - 30 %, preferably 3 - 30 %, more preferably 7 - 25 %. A glass containing BaO, when brought in contact with a refractory abundant in $SiO_2$ and $Al_2O_3$, likely forms Ba feldspar crystals in the contact portions. Accordingly, some forming utilities may require that the BaO content of a glass should be as low as possible. However, BaO is highly effective in stabilizing a glass and restraining crystal deposition. Therefore, its content is preferably 3 % or above. Where no restrictions are placed on forming utilities, if its content is 7 % or above, BaO becomes effective to reduce a relative amount of $SiO_2$ and, as a result, lower a viscosity of a glass. On the other hand, if its content is 30 % or below, deposition of Ba-based crystals can be restrained, making it possible to obtain a glass tube with high roundness. If its content is 25 % or below, deposition of Ba-based crystals is made more difficult.

ZnO is a component which effectively lowers a viscosity of a glass and restrains crystal deposition. Its content is 0 - 25 %, preferably 0 - 5 %. If 25 % or below, formation of Zn-containing crystals is made difficult. If 5 % or below, the occurrence of evaporation is reduced, which is more preferable.

It is desirable that at least one of $TiO_2$, $CeO_2$ and $WO_3$ is incorporated to shield an ultraviolet radiation. Their total content is 0.1 - 15 %, particularly 0.1 - 10 %, more preferably 0.1 - 3 %. The above effect can be confirmed if it is 0.1 % or above. On the other hand, if it is 10 % or below, a glass can be produced steadily without deposition of crystals in the glass.

Among them, $TiO_2$ is most effective in imparting a solarization resistance and ultraviolet shielding ability to a glass. It is a component which also increases a dielectric constant and a Young's modulus. However, if it coexists with $Fe_2O_3$ in a glass, coloration is likely to occur. Its content is 0 - 15 %, preferably 0.01 - 5 %, more preferably 0.01 - 3 %, further preferably 0.1 - 2 %. The above effect is obtained if the $TiO_2$ content is 0.01 % or above, preferably 0.1 % or above. On the other hand, if its content is 10 % or below, a glass can be produced steadily without deposition of crystals in the glass. If its content is 3 % or below, the occurrence of coloration is restrained even if the $Fe_2O_3$ content increases. If its content is 2 % or below, the occurrence of coloration is further restrained.

$WO_3$ has an ultraviolet shielding effect. Its content is 0 - 15 %, preferably 0 - 5 %. As long as its content does not exceed 15 %, a glass can be produced steadily without deposition of crystals in the glass.

$CeO_2$ has an ultraviolet shielding effect as well as a solarization preventing effect. Its content is 0 - 5 %, preferably 0.01 - 5%, more preferably 0.1- 3%, further preferably 2 - 3 % (excluding 2 %). If its content does not exceed 5 %, a glass can be melted without deposition of crystals. On the other hand, if its content is 0.01 % or above, an effect as a refining agent can be expected. If its content is 0.1 % or above, a solarizationpreventingeffect can be expected. If its content exceeds 2 %, a significant ultraviolet shielding effect is obtained. For example, such a glass having a wall thickness of 0.2 mm is independently capable of shielding an ultraviolet radiation near 313 nm.

$ZrO_2$ improves chemical stability of a glass and is effective to prevent blooming of alkali or alkaline earth. It is a component which also increases a Young's modulus. On the other hand, it increases a viscosity of a glass. Its content is 0 - 9 %, preferably 0.01 - 5 %, more preferably 0.01 - 3 %, further preferably 0.01 - 2 % . If the $ZrO_2$ content is at least 0.01 %, the above effect can be obtained. On the other hand, if it is 5 % or below, particularly 3 % or below, a stable glass can be obtained without formation of Zr-containing crystals. If it is 2 % or below, a possibility of inducing formation of other crystals also becomes negligible.

$SnO_2$ has a refining function and a glass stabilizing effect. Its content is 0 - 10 %, preferably 0.01 - 5 %. If the $SnO_2$ content is 0.01 % or above, a refining effect can be expected. If it is 10 % or below, particularly 5 % or below, no crystal formation occurs, which is preferable.

$Nb_2O_5$ has a solarization preventing effect. Its content is 0 - 15 %, preferably 0 - 10 %. If its content does not exceed 15 %, a glass can be produced steadily without deposition of crystals. If its content does not exceed 10 %, a production process can be further stabilized.

$Ta_2O_5$ has a solarization preventing effect. Its content is 0 - 15 %. If its content does not exceed 15 %, a glass can be produced steadily without deposition of crystals.

$P_2O_5$ is a component which constitutes a glass network former and effective in a small amount to suppress formation of crystals. However, an excessive amount thereof causes phase separation leading to opacity of a glass. The $P_2O_5$ content is 0 - 10 %, preferably 0 - 5 %, more preferably 0.1 - 3 %. If it is at least 0.1 %, the above effect can be obtained. On the other hand, if it is 10 % or below, the occurrence of phase separation is reduced. If it is 5 % of below, mass production is facilitated. It is further preferably 3 % or below.

$Bi_2O_3$ is a component which increases a dielectric constant of a glass. Inclusion thereof is preferred when a high dielectric constant is needed to reduce an area of an external electrode. Its content is 0 - 30 %. If its content does not exceed 30 %, a glass can be produced steadily without deposition of crystals in the glass.

A chloride is an effective refining agent. An amount of a chloride, in terms of an amount of $Cl_2$ remaining in a glass, is 0 - 0.5 %, preferably 0.001 - 0.5 %. If the $Cl_2$ content is at least 0.001 %, a sufficient refining effect is obtained. If it is 0.5 % or below, no harm is given to a working environment.

$Sb_2O_3$ is an effective refining agent and its content is 0 - 1 %, preferably 0.01 - 1 %, more preferably 0.1 - 1 %. If its content is 0.01 % or above, its refining effect becomes noticeable. If 0.1 % or above, a sufficient refining effect can be obtained. On the other hand, if its content does not exceed 1 %, the occurrence of such a phenomenon that a glass is colored black as a result of reduction of Sb by a heat generated during processing of the glass can be reduced.

Besides the preceding components, various components can also be contained in a glass, including $Fe_2O_3$, sulfur-based components ($SO_3$), $Cl_2$, $F_2$ and rare-earth components.

$Fe_2O_3$ is a component which is inevitably contained in a glass in a glass industry, unless intentionallyexcluded. $Fe_2O_3$ causes coloration or solarization of a glass, absorbs an ultraviolet radiation or restrains solarization, depending on its valence number and coordination number. That is, an $Fe^{2+}$ ion imparts a blue color to a glass and an $Fe^{3+}$ ion in low coordination colors a glass in brown. However, an $Fe^{3+}$ ion in high coordination shows a sharp absorption in the ultraviolet region and imparts no color but ultraviolet absorption capacity to a glass. It also has a solarization preventing effect. Those ions coexist and a proportion thereof continuously varies with the degree of oxidation of a glass. Accordingly, the glass must be brought in an oxidation state so that a trivalent Fe increases to a maximum. It is however difficult to bring a condition where a trivalent Fe in high coordination exists exclusively. Therefore, a control in content of Fe itself becomes important. The $Fe_2O_3$ content is controlled within the range of 0.001 - 0.1 %, preferably 0.005 - 0.06 %, more preferably 0.01 - 0.03 %. If it is 0.001 % or above, a solarization preventing effect can be obtained. A recommended content is 0.005 % or above. If it is 0.01 % or above, a solarization preventing effect becomes more significant. On the other hand, if it is 0.1 % or below, the occurrence of coloration by Fe ions can be restrained. However, 0.06 % or below is desirable. In case $TiO_2$ is also contained, coloration is promoted. It is accordingly desirable that the $Fe_2O_3$ content is reduced to 0.03 % or below, particularly in applications such as a high definition TV strict with color tones.

A sulfur-based component in a raw material of a glass facilitates dissolution of a powder-form raw material and promotes refining. On the other hand, if an excessively large amount of this component remains in a glass, it may reboil during processing of a lamp to form bubbles which possibly results in run-down of the lamp. Therefore, the content of this component must be strictly controlled. As an alkali content of a glass increases, a permissible amount of the sulfur-based component in the glass increases. A content of the sulfur-based component, in terms of $SO_3$, is 0.0001 - 0.05 %, preferably 0.0005 - 0.02 %, more preferably 0.0005 - 0.01 %, further preferably 0.0005 - 0.005 %. If it is 0.0001 % or above, the above effect can be obtained. If it is 0.0005 % or above, the above effect becomes more significant. On the other hand, if it is 0.05 % or below, bubble formation due to the reboiling can be prevented. If it is 0.02 % or below, steady mass production of a glass is made possible. Because a glass having a alkali content of about 2 % or below is likely to reboil, the content of the sulfur-based component is preferably limited to 0.01 % or below. It is particularly desirable that the content of the sulfur-based component is adjusted to 0.005 % or below.

$SO_3$ is often included in a raw material or fuel as an impurity. It accordingly becomes necessary to select a raw material based on the amount of the impurity and the type of the sulfur compound. As a fuel, the use of a natural gas rather than a heavy oil is recommended. In case the impurity present in a raw material or fuel, alone, is not sufficient, the sulfur compound in the form of a sulfate may be added. Because a permissible amount of $SO_3$ increases as an alkali content increases, the $SO_3$ content may be adjusted by considering the condition of bubbles in a glass. Various methods exist whereby $SO_3$ remaining in a glass can be reduced. One method is to allow it to coexist with at least one of $CeO_2$, $SnO_2$, $Sb_2O_3$, Cl, F and a nitrate, preferably two or more of them, if possible. In accordance with another method, a gas such as oxygen or air is bubbled through a glass melt.

$Cl_2$ has a refining effect and can be introduced in the form of a chloride such as barium chloride. It tends to pass off by evaporation before a glass is processed. A residual content of $Cl_2$ is preferably 1 % orbelow, particularlypreferably 0.0001 - 0.5 %.

$F_2$ also has a refining effect and can be introduced in the form of a fluoride such as aluminum fluoride. It tends to pass off by evaporation before a glass is formed. A residual content of $F_2$ is preferably 1 % or below.

A rare-earth component such as $Y_2O_3$ or $La_2O_3$ may be incorporated up to 10 % for the purpose of increasing a Young's modulus of a glass.

$As_2O_3$ has a significant refining effect and is effective to restrain coloration by an $Fe^{3+}$ ion in high coordination. However, $As_2O_3$ likely causes solarization if it coexists with $CeO_2$, and is also highly toxic. It is accordingly desirable that $As_2O_3$ is left out of a design of mix, or limited to 0.1 % or below, preferably 0.005 % or below, in terms of an impurity level. PbO is similar to $As_2O_3$ and its content, in terms of an impurity level, is desirably limited to 0.5% or below, preferably 0.1 % or below, more preferably 0.01 % or below.

A method for fabrication of the envelope for an external electrode fluorescent lamp, in accordance with the present invention, is below described as it is shaped into a tubular form.

First, a raw material is formulated and mixed so that it has the above-described properties and composition, and then melted in a gas-fired furnace. If necessary, a water content of a glass is adjusted. A molten glass is then shaped into a tubular form utilizing a tube drawing process such as a Danner, down-draw or up-draw process. The tubular glass is cut to a predetermined size and processed, if necessary, to obtain an envelope for an external electrode fluorescent lamp. The size of the envelope is not particularly specified. However, when the lamp is applied to a backlight unit of a liquid crystal display device, its envelope is preferably a small-diameter tube having an outer diameter of 8 mm or less, particularly 5.2 mm or less. A wall thickness of the envelope is preferably small enough to increase an electrostatic capacity, specifically 0.6 mm or less, particularly 0.4 mm or less, further preferably 0.3 mm or less. The wall thickness variation affects a power input to a lamp, leading to nonuniformity in brightness of lamps. It accordingly becomes necessary to minimize the variation. This variation is preferably maintained within 0.02 mm, particularly preferably within 0.01 mm. An end portion of the envelope is measured for wall thickness along its circumference and a difference between maximum and minimum values is taken as the wall thickness variation.

Using this envelope, an external electrode fluorescent lamp is fabricated according to a conventional method. Prior to assembling the fluorescent lamp, electrodes may be provided on exterior surface end portions of the envelope, or a layer consisting of a phosphor or electron emitting material may be formed on an interior surface of the envelope. Also, an exhaust tube may be joined to an opening end of the envelope or a sealing member may be placed to close the opening end.

**EXAMPLE 1**

The present invention is now described with reference to Examples. Tables 1 and 2 list compositions and properties obtained for examples (sample Nos. 1 - 10) in accordance with the present invention.

[TABLE 1]

| | 1 | 2 | 3 | 4 | 5 | 5 | 7 | 8 | 9 | 10 |
|---|---|---|---|---|---|---|---|---|---|---|
| Glass Composition (Mass %) | | | | | | | | | | |
| $SiO_2$ | 48 | 48 | 52 | 54 | 43 | 49 | 44.4 | 46 | 43 | 46 |
| $B_2O_3$ | 15 | 15 | 15 | 8 | 16 | 14.4 | 14.4 | 16 | 18 | 17 |
| $Al_2O_3$ | 10 | 10 | 10 | 12 | 8 | 10.7 | 10.7 | 10 | 8 | 11 |
| $Li_2O$ | | | | | | | | | 0.1 | |
| $Na_2O$ | | | | | | 0.05 | 0.03 | 1.5 | 1 | 0.7 |
| $K_2O$ | | | | | | | | 2.3 | 1.5 | 1.1 |
| MgO | | 0.5 | | 0.6 | | | | 0.3 | 0.3 | 0.3 |
| CaO | | 1.9 | 1.7 | 4.4 | 1.3 | | | 3.2 | 2.1 | 1.5 |
| SrO | 1 | 10.6 | 8.3 | 8 | 13 | | | 10 | 16 | 12 |
| BaO | 24 | 11 | 8 | 10 | 8 | 24.8 | 24.8 | 8 | 7 | 8 |
| ZnO | 1 | 2 | 0 | | 5 | | | 1 | 0 | 0 |
| $TiO_2$ | 0.1 | 0.1 | 0.5 | 0.5 | 0.1 | 0.5 | 4 | 0.8 | 0.1 | 0.1 |
| $WO_3$ | | | 0.2 | | 1 | | | | | 0.6 |
| $CeO_2$ | 0.4 | 0.4 | | | 0.8 | | | | 0.4 | |
| $ZrO_2$ | 0.2 | 0.2 | 0.05 | 1 | 0.05 | | | 0.2 | 0.1 | |
| $SnO_2$ | 0.2 | 0.2 | 0.8 | 0.5 | 1 | | 0.2 | 0.6 | 0.05 | 0.6 |
| $Nb_2O_3$ | | | 0.2 | | 1 | | | | | |
| $Ta_2O_3$ | | | 0.2 | | 1 | | | | | |
| $P_2O_5$ | | | | | 0.8 | | | | 1.2 | |
| $Bi_2O_3$ | | | | | | | | | 1.2 | |
| $Cl_2$ | 0.093 | 0.088 | 0.002 | 0.003 | 0.004 | | | 0.121 | 0.009 | 0.113 |
| $Sb_2O_3$ 0 | 0 | 0 | 0.1 | 0.5 | 0 | 0.5 | 0.3 | | | 0.5 |
| $Fe_2O_3$ | 0.011 | 0.011 | 0.015 | 0.02 | 0.009 | | 0.015 | 0.009 | 0.014 | 0.019 |
| $SO_3$ | 0.0006 | 0.0006 | 0.0009 | 0.009 | 0.0012 | | | 0.009 | 0.008 | 0.009 |

(continued)

|  | 1 | 2 | 3 | 4 | 5 | 5 | 7 | 8 | 9 | 10 |
|---|---|---|---|---|---|---|---|---|---|---|
| Glass Composition (Mass %) |  |  |  |  |  |  |  |  |  |  |
| $As_2O_3$ | <0.0001 |  |  |  |  |  |  |  |  |  |
| PbO | 0.0009 |  |  |  |  |  |  |  |  |  |
| Li+Na+K | 0 | 0 | 0 | 0 | 0 | 0.05 | 0.03 | 3.8 | 2.6 | 1.8 |
| Mg+Ca+Sr+Ba | 25 | 24 | 18 | 23 | 22.3 | 24.87 | 24.8 | 21.5 | 25.4 | 22.3 |
| Ti+Ce+W | 0.5 | 0.5 | 0.7 | 0.5 | 1.9 | 0.5 | 4 | 0.8 | 0.5 | 0.7 |

[TABLE 2]

|  | 1 | 2 | 3 | 4 | 5 | 6 | 7 | 8 | 9 | 10 |
|---|---|---|---|---|---|---|---|---|---|---|
| Dielectric Loss Tangent ($\times 10^{-4}$) | | | | | | | | | | |
| 1MHz Room Temperature | 3 | 7 | | 7 | 5 | 4 | | 25 | | 17 |
| 40KHz 150°C | <2 | <2 | | <2 | 3 | <2 | | 58 | | 24 |
| 40KHz 250°C | <2 | 3 | | 3 | 13 | 2 | | 190 | | 70 |
| 40KHz 350°C | 8 | 26 | | 23 | 120 | 12 | | 860 | | 240 |
| Viscosity Characteristics | | | | | | | | | | |
| Strain Point (°C) | 582 | 574 | | 637 | 585 | 586 | | 520 | 510 | 540 |
| $10^4$ (C) | 1145 | 1079 | | 1205 | 1021 | 1171 | 1112 | 994 | 934 | 967 |
| $10^3$ (C) | 1290 | 1223 | | 1380 | 1177 | 1355 | 1278 | 1146 | 1072 | 1101 |
| Temperature Difference Between $10^4$ and Strain Point | 563 | 505 | | 568 | 436 | 585 | 1112 | 474 | 424 | 427 |
| Liquidus Viscosity | $10^{5.2}$ | $10^{5.0}$ | | $10^{5.7}$ | | $10^{5.3}$ | | | | |
| Infrared Transmittance Coefficient X | 0.2 | 0.2 | | 0.1 | 0.2 | 0.2 | 0.4 | 0.2 | | 0.3 |
| Density (g/cm$^3$) | 2.8 | 2.8 | | 2.6 | 2.7 | 2.7 | 2.7 | 2.7 | | 2.7 |
| Young's Modulus | 68.4 | 75.2 | | 76.0 | 74.1 | | | 78.1 | | 74.4 |

First, a raw material of a glass was formulated to prepare the composition specified in Table 1 and then melted in a platinum crucible at 1,600 °C for 18 hours. After the melting, the melt was formed into a predetermined shape and then processed to prepare a glass sample. The physical properties of each sample are shown in Table 2. As a chief raw material, silicon oxide (not greater than 1 % on a 150 $\mu$m screen, not greater than 30 % below a 45 $\mu$m screen), aluminum oxide (mean particle diameter of 50 $\mu$m·microtrack), boric acid (not greater than 10 % on a 400 $\mu$m screen, not greater than 10 % below a 63 $\mu$m screen), high-purity calcium carbonate, strontium carbonate (mean particle diameter of 2 $\mu$m), barium nitrate (not greater than 1 % on a 500 $\mu$m screen, not greater than 5 % below a 45 $\mu$m screen) , barium carbonate (mean particle diameter of 2 $\mu$m) and zinc oxide (not greater than 1 % on a 45 $\mu$m screen) were used. As other small-quantity components, reagent-class boric acid anhydride, magnesium oxide, strontium nitrate, barium chloride, lithium carbonate, sodium carbonate, potassium carbonate, zirconium oxide, antimony pentoxide, tin (IV) oxide, aluminum metaphosphate, yttrium oxide, titanium oxide, cerium oxide, iron oxide, tungsten oxide, bismuth oxide, tantalum oxide and strontium sulfate were used. The respective amounts of PbO, $Fe_2O_3$ and $Cl_2$ were determined by X-ray fluorescence analysis. The respective amounts of $As_2O_3$ and $SO_3$ were determined by a sequence of liquefaction and chemical analysis.

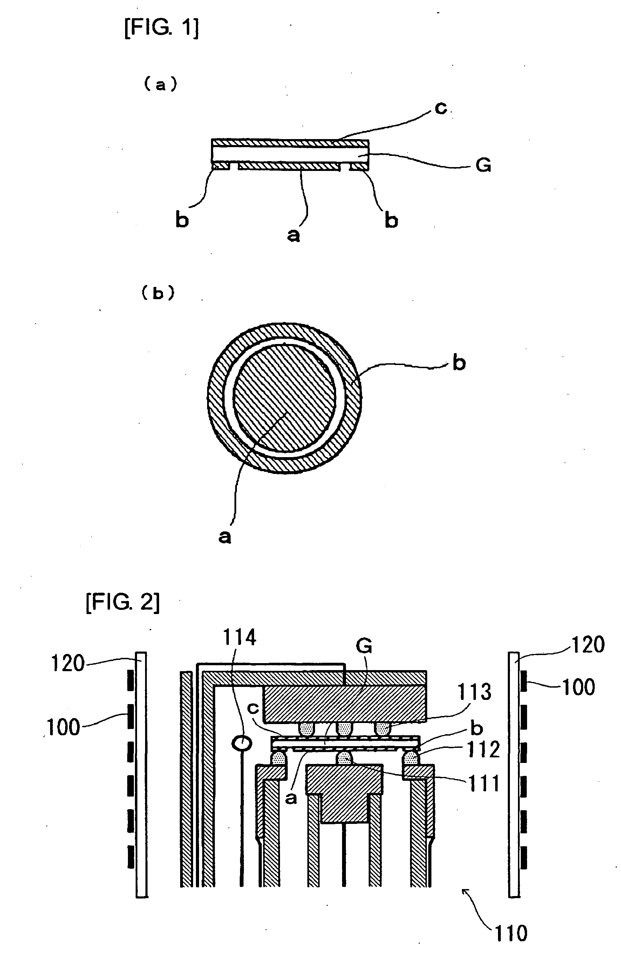

A dielectric loss tangent was evaluated according to the following procedure. Specifically, a # 1000 finished and disc-shaped sample G having a 20 mm diameter and 1 mm thickness was prepared, as shown in Figure 1. Gold was vapor deposited on one surface of the sample to form a main electrode a having an outer diameter of 14.5 mm and a guide electrode b concentrically extending around the main electrode a and having an outer diameter of 20 mm and an inner diameter of 16 mm. In addition, gold was vapor deposited over an entire area of the other surface of the sample to form a counter electrode c.

As shown in Figure 2, a measuring apparatus is constructed to include a heater 100, a sample measuring chamber 110 and an LCR meter (not shown). A non-inductively wound tape heater is used as the heater. The sample measuring chamber 110 is placed in a shield (metal cylinder) to avoid electromagnetic induction. A main electrode terminal 111 and a guide electrode terminal 112 are located in the sample measuring chamber 110 for unitary elevation therein and positioned for contact with the main electrode a and the guide electrode b of the sample G, respectively. The main electrode terminal 111 is connected by a lead to a terminal of the LCR meter and the guide electrode terminal 112 is connected by a lead to a guide terminal of the LCR meter. A counter electrode terminal 113 is located in an upper area of the sample measuring chamber 110 for contact with the counter electrode c of the sample G. A shield (aluminum foil, not shown) is provided between a lead coupled to the counter electrode terminal 113 and a lead coupled to the main electrode terminal 111 to avoid interaction between them. Also, a thermocouple 114 connected to a thermometer is located near the sample G retained in the sample measuring chamber 110 for measurement of a temperature of the sample.

When the above measuring apparatus is used to measure dielectric characteristics of the sample G, the sample G is first positioned to overlie both the main electrode terminal 111 and the guide electrode terminal 112. Subsequently, the both terminals are moved upward until the sample G is pushed against the counter electrode terminal 113 and retained in this position. The sample G is then heated with the heater 100. When its temperature reaches a predetermined temperature, its dielectric characteristics are measured with the LCR meter. According to the above procedure, dielectric loss tangent values were determined under conditions of room temperature-1 MHz, 40 KHz-150 °C, 40 KHz-250 °C and 40 KHz-350 °C.

A temperature corresponding to each viscosity was determined according to ASTM C336, ASTM C338 and a ball pulling method.

The following procedure was utilized to measure the liquidus viscosity. First, a glass was pulverized to a size of about 0.1 mm, introduced in a boat-like platinum container, placed in a gradient heating furnace for 24 hours and then removed. The resulting sample was observed with a microscope to measure a temperature (liquidus temperature) at which an initial phase of crystals appeared. Subsequently, a viscosity (liquidus viscosity) at the temperature measured for the initial phase was determined from the preliminarily measured temperature vs. viscosity relationship of the glass.

The coefficient X, indicative of the water content, was calculated by inserting values for the transmittance a at 3,840 cm$^{-1}$ and the transmittance b at a minimum point near 3,560 cm$^{-1}$, both measured by an infrared spectrometer, into the following equation. In the equation, t denotes a sample thickness (mm).

$$X = (\log(a/b))/t$$

The density was determined by an Archimedes' method and the Young's modulus by a bending resonance method.

The obtained glass samples were also evaluated for ultraviolet shielding capability, solarization resistance, number of bubbles, reboil tendency, processability and occurrence of coloration. The results are shown in Table 3.

[TABLE 3]

|  | 1 | 2 | 3 | 4 | 5 | 6 | 7 | 8 | 9 | 10 |
|---|---|---|---|---|---|---|---|---|---|---|
| Ultraviolet Shielding Capability | A | A | A | A | A | A | A | A | A | A |
| Solarization Resistance | A | A | A | A | A | A | A | A | A | A |
| Meltability | C | C | C | C | C | B | B | A | A | A |
| Number of Bubbles/100g | 0 | 0 | 0 | 1 | 0 | 2 | 0 | 0 | 1 | 0 |
| eboil Tendency | A | A | A | A | A | A | A | A | A | A |
| Processability | A |  |  |  |  |  |  |  |  |  |
| Coloration | A | A | A | A | A | A | A | A | A | A |

The ultraviolet shielding capability was evaluated as follows. A 0.2 mm thick, sheet-form glass sample having mirror finished faces was prepared and measured for transmittance of a radiation at a wavelength of 253.7 nm. If 1 % or less, the sample was rated as "A". The wavelength of 253.7 nm is a spectral line emitted from mercury. In applications of the present invention, the lower transmittance at this wavelength is rated better.

The following procedure was utilized to evaluate the ultraviolet solarization resistance. A 1 mm thick, sheet-form glass was mirror polished at its both sides to obtain a sample. Next, a wavelength of a radiation that passed through the sample at a transmittance of 80 % was measured. The sample was then exposed for 60 minutes to an ultraviolet radiation having a main wavelength of 253.7 mm and emitted from a 40 W low-pressure mercury lamp located 20 mm away from the sample. Thereafter, a difference in transmittance of the sample prior to and subsequent to exposure to a radiation at 400 nm was measured. When the difference was within 1 %, the sample was rated as "A". This transmittance loss becomes larger for a glass having a lower ultraviolet solarization resistance. It is important that this transmittance loss is negligibly low in an envelope for a fluorescent lamp as for use in a backlight for a liquid crystal display.

The meltabilitywas evaluated according to the following procedure. 100 g of a raw material of each glass was charged in a conical pot, heated at 1,550 °C for 2 hours and then cooled to solidification. After solidification, a glass mass was removed from the pot sufficiently carefully to prevent breakage thereof and then annealed. Thereafter, a 7 mm thick section was cut out from a central portion of the glass mass and its surface was observed with a transmitted light. A glass sample was rated as "A" if an insoluble residue was not found, as "B" if slightly noticed and as "C" if present in anaggregateappearing white.

The number of bubbles was determined as follows. Ablock was cut out from each glass sample and observed with a microscope at 40 X magnification. The number of noticeable bubbles (having diameters of about 30 μm or above) was counted and then converted to the number per 100 g.

The reboil tendency was determined as follows. An about 10 millimeters square piece of each glass sample was welded to a distal end of a glass rod, heated with an oxygen burner until it was rounded, cooled and then visually observed. If the number of bubbles (excluding those clearly appeared as drawn bubbles) was observed to be within one, then the reboil tendency was rated as "A".

The processability was evaluated by sealing an end of a tubular glass, specifically according to the following procedure. Each sample was processed into a fine tube. One end of the tube, while heated with a burner, was pinch sealed using a scissors-like tool. A seal area was observed to confirm the absence of bubbles due to reboiling and deformation of a tube portion in the neighborhood of the sealed end. The sample was rated as "A" if no problem observed.

A 1 mm thick glass sample was visually observed and rated as "A" if no coloration observed.

## EXAMPLE 2

A glass having the same composition as each glass sample in Example 1 was used to fabricate an envelope for an external electrode fluorescent lamp. As a result of evaluation, its wall thickness variation was confirmed to be within 0.01 mm.

Specifically, the envelope was fabricated according to the following procedure. First, a raw material having the same composition as each sample was formulated and melted in a refractory furnace at 1,600 °C for 24 hours. Thereafter, the glass melt was supplied to a Danner process machine where it was tube drawn and then cut into a 800 mm long glass tube having an outer diameter of 3.0 mm and a wall thickness of 0.3 mm. This was used as the envelope. The wall thickness variation of the tube, as well as its roundness, was measured using an outer/inner diameter measuring device for evaluation.

## EXAMPLE 3

Using each envelope made in Example 2, an external electrode fluorescent lamp is fabricated. In this Example, two different types of lamps are fabricated.

A fabrication method of a first type of fluorescent lamp is now described. The first type of fluorescent lamp is constructed by joining a sealing member and an exhaust tube to an each opening end of the envelope having an exterior surface on which electrodes have been preliminarily provided, using a sealing glass. In this embodiment, the sealing glass functions as a thermal fuse to thereby assure safety. Because the sealing glass has a relatively low heat resistance, it would soften to break an airtight condition of the lamp which is then caused to stop its operation and prevent burning of neighboring members, should an envelope temperature exceeds a heat endurance temperature of the sealing glass, i.e., a softening point (for example, 390 °C for the below-described LS-1301) in case of a noncrystalline glass or a melting point of a precipitated crystal in case of a crystallizable glass.

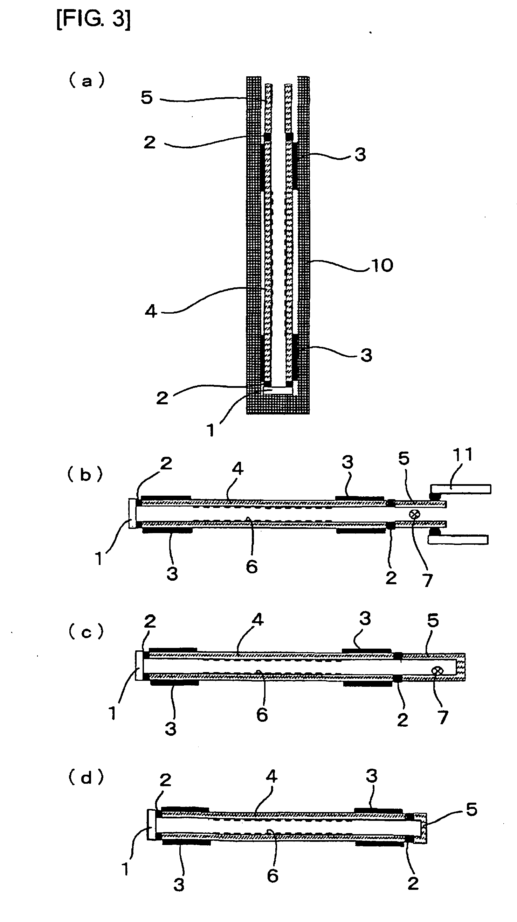

First, a sealing member 1, a sealing glass tablet 2, an envelope 4 having electrodes 3 provided thereon, and an exhaust tube 5 are inserted into a carbon mold 10, as shown in Figure 3(a), and then fired at a sealing temperature of the sealing glass to integrally join those members. A phosphor coating 6 is preliminarily applied onto an interior surface of a transparent glass tube 4 constituting the envelope 4.

The electrode 3 carried on the envelope 4 is composed of Ni, Cu, Ag or the like material. The type of the electrode forming material is not particularly specified. Examples of useful materials include a DD3600 Cu paste, DD300 Ag paste and DD7000 Ni paste manufactured by Kyoto Elex Co., Ltd. In an exemplary case where a DD300 Ag paste is used, it is transfer printed on an exterior surface of the envelope. The subsequent sintering thereof at 600 °C under nitrogen atmosphere results in obtaining a homogeneous electrode layer closely adhered to the exterior surface. Alternatively, an aluminum foil as an electrode maybe adhesively joined to the exterior surface. This method however provides poor adhesion therebetween to result in the reduced dielectric capacity, which is not desirable.

Examples of useful frits for the sealing tablet 2 include LS-1301 (using noncrystalline glass, sealing temperature 430°C, heat endurance temperature 430°C), LS-1320 (using noncrystalline glass, sealing temperature 320°C, heat endurance temperature 270 °C), LS-0206 (using noncrystalline glass, sealing temperature 450 °C, heat endurance temperature 410 °C) and LS-7105 (using crystallizable glass, sealing temperature 450 °C, heat endurance temperature 500°C), all manufactured by Nippon Electric Glass Co., Ltd. Each frit is kneaded with a low-temperature decomposable binder and then extruded into the tablet. Accordingly, resulting tablets can be used to seal each member without adversely affecting the phosphor coating and electrodes on the dielectric member. Although all the sealing glasses in the above examples are lead-based glasses, other glasses such as silver phosphate based glasses and tin phosphate based glasses can also be adopted. In consideration of the heat endurance temperature and the thermal expansion coefficients of the sealed members such as the envelope, the sealing glass may be suitably selected.

The envelope glass is pulverized in an alumina ball mill and classified using a screen with an opening of 200 $\mu$m to provide a glass powder to which a binder is subsequently added. The mixture is granulated, press molded into a disc shape and then sintered to obtain the sealing member 1. The shape of the sealing member 1 is not limited to the disc form and may be a convex form, for example.

Then, a mercury amalgam boat 7 is inserted into an interior of the exhaust tube 5, as shown in Figure 3 (b) . After evacuation using an evacuation apparatus 11, an Ar gas and an Ne gas are introduced.

Subsequently, the exhaust tube 5 is sealed at its end. The mercury amalgam boat 7 is then heated so that Hg is introduced into an interior of the envelope (Figure 3(c)).

Thereafter, the exhaust tube 5 is sealingly cut out. As a result, the first type of fluorescent lamp shown in Figure 3 (d) is obtained.

In an alternative embodiment, either one of the sealing member and the exhaust tube may be joined using a sealing glass tablet and the other directly sealed to the envelope.

A fabrication method of the second type of fluorescent lamp is now described. This second type of fluorescent lamp has a structure that excludes the above-described sealing member and exhaust tube.

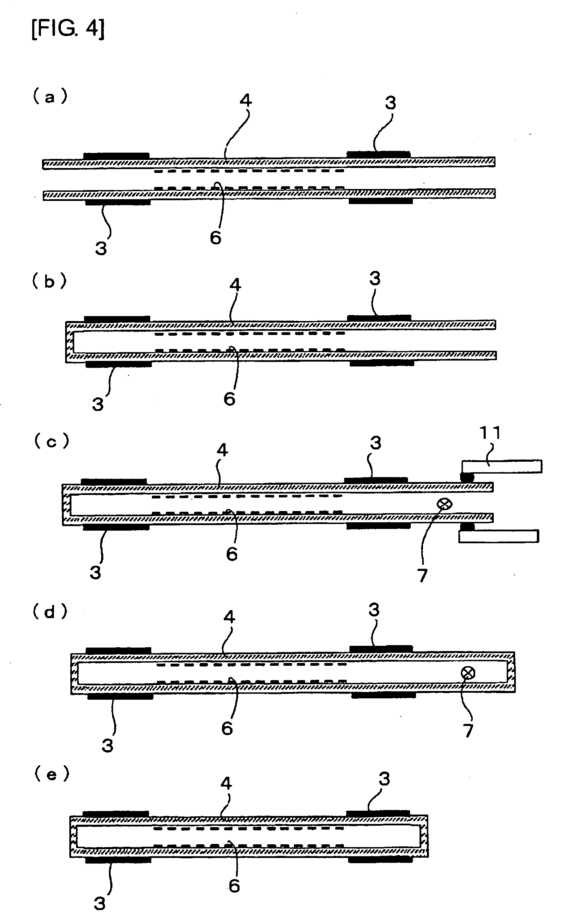

The phosphor 6 is coated on an interior of the envelope 4, as shown in Figure 4 (a) . An excess phosphor is removed with a brush. A metal paste is applied to exterior surface portions of the envelope 4 to form electrodes thereon. Then, they are together fired at 600 °C to achieve simultaneous stoving of the phosphor 6 and the electrodes 3. Formation of the electrodes 3 may be effected in a final process.

Subsequently, the envelope is melt sealed at one end, as shown in Figure 4 (b), and its interior is evacuated from the other end, followed by introduction of an Ar gas, an Ne gas and Hg (Figure 4(c) (d)).

Thereafter, the envelope is sealingly cut out to remove its portion that encloses the mercury amalgam boat 7. As a result, the second type of fluorescent lamp is obtained (Figure 4 (e)).

In the second type of fluorescent lamp, if the envelope is made from a glass having insufficient heat resistance, a metal paste firable at about 500 °C may be used. Alternatively, the electrodes may be adhesively provided in a final process.

A lamp structure other than the first and second types of fluorescent lamps can also be adopted. For example, the envelope may be joined at its one end to the sealing member or exhaust tube and melt sealed at its other end.

**Claims**

1. A glass envelope tube for use in the fabrication of an external electrode fluorescent lamp having an electrode on its exterior surface and comprising a glass having a dielectric loss tangent of 0.02 or below at 40 KHz at 250 °C and a strain point of not higher than 650 °C **characterized by** an infrared transmittance coefficient (X) of 0.1 - 0.8, when defined by the following equation;

$$X = (\log(a/b))/t$$

a: transmittance (%) at 3, 840 cm$^{-1}$
b: transmittance (%) at a minimum point near 3,560 cm$^{-1}$ t: measured thickness (mm) of a sample,
and further **characterized in that** said glass comprises an aluminoborosilicate glass containing, by mass percent,
$SiO_2$ 35 - 65 %,
$B_2O_3$ 0.1 - 25 %,
$Al_2O_3$ 2 - 20 %,
$Li_2O$ 0 - 5 %,
$Na_2O$ 0 - 5 %,
$K_2O$ 0 - 5 %,
$Li_2O + Na_2O + K_2O$ 0.1 - 5 %,

MgO 0 - 20 %,
CaO 0 - 20 %,
SrO 0 - 30 %,
BaO 0 - 30 %,
MgO + CaO + SrO + BaO 3 - 45 %,
ZnO 0 - 25 %,
$TiO_2$ 0 - 15 %,
$WO_3$ 0 - 15 %,
$CeO_2$ 0 - 5 %,
$TiO_2$ + $WO_3$ + $CeO_2$ 0.1 - 15 %,
$ZrO_2$ 0 - 9 %,
$SnO_2$ 0 - 10 %,
$Nb_2O_5$ 0 - 15 %,
$Ta_2O_5$ 0 - 15 %,
$P_2O_5$ 0 - 10 %,
$Bi_2O_3$ 0 - 30 %,
$Cl_2$ 0 - 0.5 % and
$Sb_2O_3$ 0 - 1 %.

2.  A glass envelope tube for use in the fabrication of an external electrode fluorescent lamp having an electrode on its exterior surface and comprising a glass having a dielectric loss tangent of 0.02 or below at 40 KHz at 250 °C and a strain point of not higher than 650 °C, **characterized by** an infrared transmittance coefficient (X) of 0.1 - 0.8, when defined by the following equation;

$$X = (\log(a/b))/t$$

a: transmittance (%) at 3,840 cm$^{-1}$
b: transmittance (%) at a minimum point near 3,560 cm$^{-1}$
t: measured thickness (mm) of a sample, and further **characterized in that** said glass comprises an aluminoborosilicate glass containing, by mass percent,
$SiO_2$ 35 - 65 %,
$B_2O_3$ 0.1 - 25 %,
$Al_2O_3$ 2 - 12.5 %,
$Li_2O$ 0 - below 0.1 %,
$Na_2O$ 0 - below 0.1 %,
$K_2O$ 0 - below 0.1 %,
$Li_2O$ + $Na_2O$ + $K_2O$ 0 - below 0.1 %,
MgO 0 - 20 %,
CaO 0 - 20 %,
SrO 0 - 30 %,
BaO 0 - 30 %,
MgO + CaO + SrO + BaO 3 - 45 %,
ZnO 0 - 25 %,
$TiO_2$ 0 - 15 %,
$WO_3$ 0 - 15 %,
$CeO_2$ 0 - 5 %,
$TiO_2$ + $WO_3$ + $CeO_2$ 0.1 - 15 %,
$ZrO_2$ 0 - 9 %,
$SnO_2$ 0 - 10 %,
$Nb_2O_5$ 0 - 15 %,
$Ta_2O_5$ 0 - 15 %,
$P_2O_5$ 0 - 10 %,
$Bi_2O_3$ 0 - 30 %,
$Cl_2$ 0 - 0.5 % and
$Sb_2O_3$ 0 - 1 %.

3. The glass envelope tube for an external electrode fluorescent lamp as recited in claim 1 or 2, **characterized in that** said glass envelope tube is used for the fabrication of an external electrode fluorescent lamp having an electrode on its exterior surface portion close to each end.

4. The glass envelope tube for an external electrode fluorescent lamp as recited in claim 1 or 2, **characterized in that** said glass has a dielectric loss tangent of 0.003 or below at 1 KHz at room temperature.

5. The glass envelope tube for an external electrode fluorescent lamp as recited in claim 1 or 2, **characterized in that** said glass has a dielectric loss tangent of 0.005 or below at 40 KHz at 150 °C.

6. The glass envelope tube for an external electrode fluorescent lamp as recited in claim 1 or 2, **characterized in that** said glass has a dielectric loss tangent of 0.1 or below at 40 KHz at 350 °C.

7. The glass envelope tube for an external electrode fluorescent lamp as recited in claim 1 or 2, **characterized in that** said glass shows a viscosity of $10^4$ dPa·S at a temperature of 1,200 °C or below.

8. The glass envelope tube for an external electrode fluorescent lamp as recited in claim 1 or 2, **characterized in that** said glass shows a viscosity of $10^3$ dPa·S at a temperature of 1,400 °C or below.

9. The glass envelope tube for an external electrode fluorescent lamp as recited in claim 1 or 2, **characterized in that** said glass has a liquidus viscosity of exceeding $10^4$ dPa·S.

10. The glass envelope tube for an external electrode fluorescent lamp as recited in claim 1 or 2, **characterized in that** said glass envelope tube has said electrode on its exterior surface.

11. The glass envelope tube for an external electrode fluorescent lamp as recited in claim 3, **characterized in that** said glass envelope tube has said electrode on its exterior surface portion close to each end thereof.

12. A process for producing a glass envelope tube for use in the fabrication of an external electrode fluorescent lamp comprising the following steps:

   providing a glass having a dielectric loss tangent of 0.02 or below at 40 KHz at 250 °C, a strain point of not higher than 650 °C, and an infrared transmittance coefficient (X) of 0.1 - 0.8, when defined by the following equation;

$$X = (\log(a/b))/t$$

   a: transmittance (%) at 3,840 cm$^{-1}$
   b: transmittance (%) at a minimum point near 3,560 cm$^{-1}$ t: measured thickness (mm) of a sample, said glass comprising an aluminoborosilicate glass containing, by mass percent,
   $SiO_2$ 35 - 65 %,
   $B_2O_3$ 0.1 - 25 %,
   $Al_2O_3$ 2 - 20 %,
   $Li_2O$ 0 - 5 %,
   $Na_2O$ 0 - 5 %,
   $K_2O$ 0 - 5 %,
   $Li_2O + Na_2O + K_2O$ 0.1 - 5 %, MgO 0 - 20 %,
   CaO 0 - 20 %,
   SrO 0 - 30 %,
   BaO 0 - 30 %,
   MgO + CaO + SrO + BaO 3 - 45 %, ZnO 0 - 25 %,
   $TiO_2$ 0 - 15 %,
   $WO_3$ 0 - 15 %,
   $CeO_2$ 0 - 5 %,
   $TiO_2 + WO_3 + CeO_2$ 0.1 - 15 %, $ZrO_2$ 0 - 9 %,
   $SnO_2$ 0 - 10 %,

$Nb_2O_5$ 0 - 15 %,
$Ta_2O_5$ 0 - 15 %,
$P_2O_5$ 0 - 10 %,
$Bi_2O_3$ 0 - 30 %,
$Cl_2$ 0 - 0.5 % and
$Sb_2O_3$ 0 - 1 %
shaping the molten glass into a tubular form by a tube drawing process.

13. A process for producing a glass envelope tube for use in the fabrication of an external electrode fluorescent lamp comprising the following steps:

providing a glass having a dielectric loss tangent of 0.02 or below at 40 KHz at 250 °C, a strain point of not higher than 650 °C, and an infrared transmittance coefficient (X) of 0.1 - 0.8, when defined by the following equation;

$$X = (\log(a/b))/t$$

a: transmittance (%) at 3,840 $cm^{-1}$
b: transmittance (%) at a minimum point near 3,560 $cm^{-1}$ t: measured thickness (mm) of a sample, said glass comprising an aluminoborosilicate glass containing, by mass percent,
$SiO_2$ 35 - 65 %,
$B_2O_3$ 0.1 - 25 %,
$Al_2O_3$ 2 - 12.5 %,
$Li_2O$ 0 - below 0.1 %,
$Na_2O$ 0 - below 0.1 %,
$K_2O$ 0 - below 0.1 %,
$Li_2O + Na_2O + K_2O$ 0 - below 0.1 %,
MgO 0 - 20 %,
CaO 0 - 20 %,
SrO 0 - 30 %,
BaO 0 - 30 %,
MgO + CaO + SrO + BaO 3 - 45 %,
ZnO 0 - 25 %,
$TiO_2$ 0 - 15 %,
$WO_3$ 0 - 15 %,
$CeO_2$ 0 - 5 %,
$TiO_2 + WO_3 + CeO_2$ 0.1 - 15 %,
$ZrO_2$ 0 - 9 %,
$SnO_2$ 0 - 10 %,
$Nb_2O_5$ 0 - 15 %,
$Ta_2O_5$ 0 - 15 %,
$P_2O_5$ 0 - 10 %,
$Bi_2O_3$ 0 - 30 %,
$Cl_2$ 0 - 0.5 % and
$Sb_2O_3$ 0 - 1 %
shaping the molten glass into a tubular form by a tube drawing process.

**Patentansprüche**

1. Glashüllenrohr zur Verwendung bei der Fertigung einer Extemelektroden-Fluoreszenzlampe, die auf ihrer Außenfläche eine Elektrode aufweist und die ein Glas enthält, das einen dielektrischen Verlustfaktor von 0,02 oder weniger bei 40 kHz bei 250 °C und eine untere Kühltemperatur von nicht höher als 650 °C aufweist, **gekennzeichnet durch** einen Infrarot-Transmissionskoeffizienten (X) von 0,1 bis 0,8, wenn **durch** die folgende Gleichung definiert:

# EP 1 653 499 B1

$$X = (\log(a/b))/t$$

a: Transmission (%) bei 3840 cm$^{-1}$
b: Transmission (%) bei einem Minimumspunkt nahe 3560 cm$^{-1}$ t: Messdicke (mm) einer Probe,
und darüber hinaus **dadurch gekennzeichnet, dass** das Glas ein Aluminoborosilikatglas umfasst, enthaltend in Masseprozent:

SiO$_2$ 35 - 65 %,
B$_2$O$_3$ 0,1 - 25 %,
Al$_2$O$_3$ 2 - 20 %,
Li$_2$O 0 - 5 %,
Na$_2$O 0 - 5 %,
K$_2$O 0 - 5 %,
Li$_2$O + Na$_2$O + K$_2$O 0,1 - 5 %,
MgO 0 - 20 %,
CaO 0 - 20 %,
SrO 0 - 30 %,
BaO 0 - 30 %,
MgO + CaO + SrO + BaO 3 - 45 %,
ZnO 0 - 25 %,
TiO$_2$ 0 - 15 %,
WO$_3$ 0 - 15 %,
CeO$_2$ 0 - 5%,
TiO$_2$ + WO$_3$ + CeO$_2$ 0,1 - 15 %,
ZrO$_2$ 0 - 9 %,
SnO$_2$ 0 - 10 %,
Nb$_2$O$_5$ 0 - 15 %,
Ta$_2$O$_5$ 0 - 15 %,
P$_2$O$_5$ 0 - 10 %,
Bi$_2$O$_3$ 0 - 30 %,
Cl$_2$ 0 - 0,5 %, und
Sb$_2$O$_3$ 0 - 1 %.

2. Glashüllenrohr zur Verwendung bei der Fertigung einer Extemelektroden-Fluoreszenzlampe, die auf ihrer Außenfläche eine Elektrode aufweist und die ein Glas enthält, das einen dielektrischen Verlustfaktor von 0,02 oder weniger bei 40 kHz bei 250 °C und eine untere Kühltemperatur von nicht höher als 650 °C aufweist, **gekennzeichnet durch** einen Infrarot-Transmissionskoeffizienten (X) von 0,1 bis 0,8, wenn **durch** die folgende Gleichung definiert:

$$X = (\log(a/b))/t$$

a: Transmission (%) bei 3840 cm$^{-1}$
b: Transmission (%) bei einem Minimumspunkt nahe 3560 cm$^{-1}$ t: Messdicke (mm) einer Probe,
und darüber hinaus **dadurch gekennzeichnet, dass** das Glas ein Aluminoborosilikatglas umfasst, enthaltend in Masseprozent:

SiO$_2$ 35 - 65 %,
B$_2$O$_3$ 0,1 - 25 %,
Al$_2$O$_3$ 2 - 12,5 %,
Li$_2$O 0 - unter 0,1 %,
Na$_2$O 0 - unter 0,1 %,
K$_2$O 0 - unter 0,1 %,
Li$_2$O + Na$_2$O + K$_2$O 0 - unter 0,1 %,
MgO 0 - 20 %,
CaO 0 - 20 %,

SrO 0 - 30 %,
BaO 0 - 30 %,
MgO + CaO + SrO + BaO 3 - 45 %,
ZnO 0 - 25 %,
$TiO_2$ 0 - 15 %,
$WO_3$ 0 - 15 %,
$CeO_2$ 0 - 5 %,
$TiO_2 + WO_3 + CeO_2$ 0,1 - 15 %,
$ZrO_2$ 0 - 9 %,
$SnO_2$ 0 - 10 %,
$Nb_2O_5$ 0 - 15 %,
$Ta_2O_5$ 0 - 15 %,
$P_2O_5$ 0 - 10 %,
$Bi_2O_3$ 0 - 30 %,
$Cl_2$ 0 - 0,5 %, und
$Sb_2O_3$ 0 - 1 %.

3. Glashüllenrohr für eine Extemelektroden-Fluoreszenzlampe nach Anspruch 1 oder 2, **dadurch gekennzeichnet, dass** das Glashüllenrohr zur Fertigung einer Extemelektroden-Fluoreszenzlampe verwendet wird, die eine Elektrode auf ihrem Außenflächenteilbereich nahe jedem Ende aufweist.

4. Glashüllenrohr für eine Extemelektroden-Fluoreszenzlampe nach Anspruch 1 oder 2, **dadurch gekennzeichnet, dass** das Glas einen dielektrischen Verlustfaktor von 0,003 oder weniger bei 1 kHz bei Raumtemperatur aufweist.

5. Glashüllenrohr für eine Extemelektroden-Fluoreszenzlampe nach Anspruch 1 oder 2, **dadurch gekennzeichnet, dass** das Glas einen dielektrischen Verlustfaktor von 0,005 oder weniger bei 40 kHz bei 150 °C aufweist.

6. Glashüllenrohr für eine Extemelektroden-Fluoreszenzlampe nach Anspruch 1 oder 2, **dadurch gekennzeichnet, dass** das Glas einen dielektrischen Verlustfaktor von 0,1 oder weniger bei 40 kHz bei 350 °C aufweist.

7. Glashüllenrohr für eine Extemelektroden-Fluoreszenzlampe nach Anspruch 1 oder 2, **dadurch gekennzeichnet, dass** das Glas eine Viskosität von $10^4$ dPa·s bei einer Temperatur von 1200 ° oder darunter zeigt.

8. Glashüllenrohr für eine Extemelektroden-Fluoreszenzlampe nach Anspruch 1 oder 2, **dadurch gekennzeichnet, dass** das Glas eine Viskosität von $10^3$ dPa·s bei einer Temperatur von 1400 ° oder darunter zeigt.

9. Glashüllenrohr für eine Extemelektroden-Fluoreszenzlampe nach Anspruch 1 oder 2, **dadurch gekennzeichnet, dass** das Glas eine Liquidus-Viskosität von mehr als $10^4$ dPa·s aufweist.

10. Glashüllenrohr für eine Extemelektroden-Fluoreszenzlampe nach Anspruch 1 oder 2, **dadurch gekennzeichnet, dass** das Glashüllenrohr die Elektrode auf seiner Außenfläche aufweist.

11. Glashüllenrohr für eine Extemelektroden-Fluoreszenzlampe nach Anspruch 3, **dadurch gekennzeichnet, dass** das Glashüllenrohr die Elektrode auf seinem Außenflächen-Teilbereich nahe jedem Ende davon aufweist.

12. Verfahren zur Herstellung eines Glashüllenrohrs zur Verwendung bei der Fertigung einer Extemelektroden-Fluoreszenzlampe, enthaltend die folgenden Schritte:

Bereitstellen eines Glases, das einen dielektrischen Verlustfaktor von 0,02 oder weniger bei 40 kHz bei 250 °C, eine untere Kühltemperatur von nicht höher als 650 °C und einen Infrarot-Transmissionskoeffizienten (X) von 0,1 bis 0,8 aufweist, wenn durch die folgende Gleichung definiert:

$$X = (\log(a/b))/t$$

a: Transmission (%) bei 3840 cm$^{-1}$
b: Transmission (%) bei einem Minimumspunkt nahe 3560 cm$^{-1}$

t: Messdicke (mm) einer Probe,
und darüber hinaus **dadurch gekennzeichnet, dass** das Glas ein Aluminoborosilikatglas umfasst, enthaltend
in Masseprozent:
$SiO_2$ 35 - 65 %,
$B_2O_3$ 0,1 - 25 %,
$Al_2O_3$ 2 - 20 %,
$Li_2O$ 0 - 5 %,
$Na_2O$ 0 - 5 %,
$K_2O$ 0 - 5 %,
$Li_2O + Na_2O + K_2O$ 0,1 - 5 %,
MgO 0 - 20 %,
CaO 0 - 20 %,
SrO 0 - 30 %,
BaO 0 - 30 %,
MgO + CaO + SrO + BaO 3 - 45 %,
ZnO 0 - 25 %,
$TiO_2$ 0 - 15 %,
$WO_3$ 0 - 15 %,
$CeO_2$ 0 - 5 %,
$TiO_2 + WO_3 + CeO_2$ 0,1 - 15 %,
$ZrO_2$ 0 - 9 %,
$SnO_2$ 0 - 10 %,
$Nb_2O_5$ 0 - 15 %,
$Ta_2O_5$ 0 - 15 %,
$P_2O_5$ 0 - 10 %,
$Bi_2O_3$ 0 - 30 %,
$Cl_2$ 0 - 0,5 %, und
$Sb_2O_3$ 0 - 1%,
Formen des geschmolzenen Glases in eine Rohrform in einem Rohrziehprozess.

13. Verfahren zur Herstellung eines Glashüllenrohrs zur Verwendung bei der Fertigung einer Extemelektroden-Fluoreszenzlampe, enthaltend die folgenden Schritte:

Bereitstellen eines Glases, das einen dielektrischen Verlustfaktor von 0,02 oder weniger bei 40 kHz bei 250 °C, eine untere Kühltemperatur von nicht höher als 650 °C und einen Infrarot-Transmissionskoeffizienten (X) von 0,1 bis 0,8 aufweist, wenn durch die folgende Gleichung definiert:

$$X = (\log(a/b))/t$$

a: Transmission (%) bei 3840 cm$^{-1}$
b: Transmission (%) bei einem Minimumspunkt nahe 3560 cm$^{-1}$ t: Messdicke (mm) einer Probe,
und darüber hinaus **dadurch gekennzeichnet, dass** das Glas ein Aluminoborosilikatglas umfasst, enthaltend
in Masseprozent:
$SiO_2$ 35 - 65 %,
$B_2O_3$ 0,1 - 25 %,
$Al_2O_3$ 2 - 12,5 %,
$Li_2O$ 0 - unter 0,1 %,
$Na_2O$ 0 - unter 0,1 %,
$K_2O$ 0 - unter 0,1 %,
$Li_2O + Na_2O + K_2O$ 0 - unter 0,1 %,
MgO 0 - 20 %,
CaO 0 - 20 %,
SrO 0 - 30 %,
BaO 0 - 30 %,
MgO + CaO + SrO + BaO 3 - 45 %,
ZnO 0 - 25 %,

TiO$_2$ 0 - 15 %,
WO$_3$ 0 - 15 %,
CeO$_2$ 0 - 5 %,
TiO$_2$ + WO$_3$ + CeO$_2$ 0,1 - 15 %,
ZrO$_2$ 0 - 9 %,
SnO$_2$ 0 - 10 %,
Nb$_2$O$_5$ 0 - 15 %,
Ta$_2$O$_5$ 0 - 15 %,
P$_2$O$_5$ 0 - 10 %,
Bi$_2$O$_3$ 0 - 30 %,
Cl$_2$ 0 - 0,5 %, und
Sb$_2$O$_3$ 0 - 1 %,
Formen des geschmolzenen Glases in eine Rohrform in einem Rohrziehprozess.

## Revendications

1.  Tube d'enveloppe en verre à utiliser dans la fabrication d'une lampe fluorescente à électrode externe, ayant une électrode sur sa surface extérieure et comprenant un verre ayant une tangente de perte diélectrique de 0,02 ou moins à 40 kHz à 250°C et une température de contrainte non supérieure à 650°C, **caractérisé par** un coefficient de transmittance des infrarouges (X) de 0,1-0,8, défini par l'équation suivante :

$$X = (\log(a/b))/t$$

a : transmittance (%) à 3840 cm$^{-1}$
b : transmittance (%) à un point minimum proche de 3560 cm$^{-1}$
t : épaisseur mesurée (mm) de l'échantillon,
et en outre **caractérisé en ce que** ledit verre comprend un verre aluminoborosilicate contenant, en pour-cent en masse,
SiO$_2$ 35 - 65%,
B$_2$O$_3$ 0,1 - 25%,
Al$_2$O$_3$ 2 - 20%,
Li$_2$O 0 - 5%,
Na$_2$O 0 - 5%,
K$_2$O 0 - 5%,
Li$_2$O + Na$_2$O + K$_2$O 0,1 - 5%,
MgO 0 - 20%,
CaO 0 - 20%,
SrO 0 - 30%,
BaO 0 - 30%,
MgO + CaO + SrO + BaO 3 - 45%,
ZnO 0 - 25%,
TiO$_2$ 0 - 15%,
WO$_3$ 0 - 15%,
CeO$_2$ 0 - 5%,
TiO$_2$ + WO$_3$ + CeO$_2$ 0,1 - 15%,
ZrO$_2$ 0 - 9%,
SnO$_2$ 0 - 10%,
Nb$_2$O$_5$ 0 - 15%,
Ta$_2$O$_5$ 0 - 15%,
P$_2$O$_5$ 0 - 10%,
Bi$_2$O$_3$ 0 - 30%,
Cl$_2$ 0 - 0,5%, et
Sb$_2$O$_3$ 0 - 1%.

**2.** Tube d'enveloppe en verre à utiliser dans la fabrication d'une lampe fluorescente à électrode externe, ayant une électrode sur sa surface extérieure et comprenant un verre ayant une tangente de perte diélectrique de 0,02 ou moins à 40 kHz à 250°C et une température de contrainte non supérieure à 650°C, **caractérisé par** un coefficient de transmittance des infrarouges (X) de 0,1-0,8, défini par l'équation suivante :

$$X = (\log(a/b))/t$$

a : transmittance (%) à 3840 $cm^{-1}$
b : transmittance (%) à un point minimum proche de 3560 $cm^{-1}$
t : épaisseur mesurée (mm) de l'échantillon,
et en outre **caractérisé en ce que** ledit verre comprend un verre aluminoborosilicate contenant, en pour-cent en masse,
$SiO_2$ 35 - 65%,
$B_2O_3$ 0,1 - 25%,
$Al_2O_3$ 2 - 12,5%,
$Li_2O$ 0 - moins de 0,1%,
$Na_2O$ 0 - moins de 0,1%,
$K_2O$ 0 - moins de 0,1%,
$Li_2O + Na_2O + K_2O$ 0 - moins de 0, 1%,
MgO 0 - 20%,
CaO 0 - 20%,
SrO 0 - 30%,
BaO 0 - 30%,
MgO + CaO, + SrO + BaO 3 - 45%,
ZnO 0 - 25%,
$TiO_2$ 0 - 15%,
$WO_3$ 0 - 15%,
$CeO_2$ 0 - 5%,
$TiO_2 + WO_3 + CeO_2$ 0,1 - 15%,
$ZrO_2$ 0 - 9%,
$SnO_2$ 0 - 10%,
$Nb_2O_5$ 0 - 15%,
$Ta_2O_5$ 0 - 15%,
$P_2O_5$ 0 - 10%,
$Bi_2O_3$ 0 - 30%,
$Cl_2$ 0 - 0,5%, et
$Sb_2O_3$ 0 - 1%.

**3.** Tube d'enveloppe en verre pour lampe fluorescente à électrode externe selon la revendication 1 ou 2, **caractérisé en ce que** ledit tube d'enveloppe en verre est utilisé dans la fabrication d'une lampe fluorescente à électrode externe ayant une électrode sur la partie de sa surface extérieure, proche de chaque extrémité.

**4.** Tube d'enveloppe en verre pour lampe fluorescente à électrode externe selon la revendication 1 ou 2, **caractérisé en ce que** ledit verre a une tangente de perte diélectrique de 0,003 ou moins à 1 kHz à température ambiante.

**5.** Tube d'enveloppe en verre pour lampe fluorescente à électrode externe selon la revendication 1 ou 2, **caractérisé en ce que** ledit verre a une tangente de perte diélectrique de 0,005 ou moins à 40 kHz à 150°C.

**6.** Tube d'enveloppe en verre pour lampe fluorescente à électrode externe selon la revendication 1 ou 2, **caractérisé en ce que** ledit verre a une tangente de perte diélectrique de 0,1 ou moins à 40 kHz à 350°C.

**7.** Tube d'enveloppe en verre pour lampe fluorescente à électrode externe selon la revendication 1 ou 2, **caractérisé en ce que** ledit verre a une viscosité de $10^4$ dPa.S à une température de 1200°C ou moins.

**8.** Tube d'enveloppe en verre pour lampe fluorescente à électrode externe selon la revendication 1 ou 2, **caractérisé**

**en ce que** ledit verre a une viscosité de $10^3$ dPa.S à une température de 1400°C ou moins.

9. Tube d'enveloppe en verre pour lampe fluorescente à électrode externe selon la revendication 1 ou 2, **caractérisé en ce que** ledit verre a une viscosité de liquidus de plus de $10^4$ dPa.S.

10. Tube d'enveloppe en verre pour lampe fluorescente à électrode externe selon la revendication 1 ou 2, **caractérisé en ce que** ledit tube d'enveloppe en verre a ladite électrode sur sa surface extérieure.

11. Tube d'enveloppe en verre pour lampe fluorescente à électrode externe selon la revendication 3, **caractérisé en ce que** ledit tube d'enveloppe en verre a ladite électrode sur la partie de sa surface extérieure proche de chacune de ses extrémités.

12. Procédé de production d'un tube d'enveloppe en verre à utiliser dans la fabrication d'une lampe fluorescente à électrode externe, comprenant les étapes suivantes :

disposer d'un verre ayant une tangente de perte diélectrique de 0,02 ou moins à 40 kHz à 250°C, une température de contrainte non supérieure à 650°C, et un coefficient de transmittance des infrarouges (X) de 0,1-0,8, défini par l'équation suivante :

$$X = (\log(a/b))/t$$

a : transmittance (%) à 3840 cm$^{-1}$
b : transmittance (%) à un point minimum proche de 3560 cm$^{-1}$
t : épaisseur mesurée (mm) de l'échantillon,
ledit verre comprenant un verre aluminoborosilicate contenant, en pour-cent en masse,
$SiO_2$ 35 - 65%,
$B_2O_3$ 0, 1 - 25%,
$Al_2O_3$ 2 - 20%,
$Li_2O$ 0 - 5%,
$Na_2O$ 0 - 5%,
$K_2O$ 0 - 5%,
$Li_2O + Na_2O + K_2O$ 0,1 - 5%,
MgO 0 - 20%,
CaO 0 - 20%,
SrO 0 - 30%,
BaO 0 - 30%,
MgO + CaO, + SrO + BaO 3 - 45%,
ZnO 0 - 25%,
$TiO_2$ 0 - 15%,
$WO_3$ 0 - 15%,
$CeO_2$ 0 - 5%,
$TiO_2 + WO_3 + CeO_2$ 0, 1 - 15%,
$ZrO_2$ 0 - 9%,
$SnO_2$ 0 - 10%,
$Nb_2O_5$ 0 - 15%,
$Ta_2O_5$ 0 - 15%,
$P_2O_5$ 0 - 10%,
$Bi_2O_3$ 0 - 30%,
$Cl_2$ 0 - 0,5%, et
$Sb_2O_3$ 0 - 1% ;
mise en forme tubulaire du verre fondu par un processus d'étirage de tube.

13. Procédé de production d'un tube d'enveloppe en verre à utiliser dans la fabrication d'une lampe fluorescente à électrode externe, comprenant les étapes suivantes :

disposer d'un verre ayant une tangente de perte diélectrique de 0,02 ou moins à 40 kHz à 250°C, une température de contrainte non supérieure à 650°C, et un coefficient de transmittance des infrarouges (X) de 0,1-0,8, défini par l'équation suivante :

$$X = (\log(a/b))/t$$

a : transmittance (%) à 3840 $cm^{-1}$
b : transmittance (%) à un point minimum proche de 3560 $cm^{-1}$
t : épaisseur mesurée (mm) de l'échantillon,
ledit verre comprenant un verre aluminoborosilicate contenant, en pour-cent en masse,
$SiO_2$ 35 - 65%,
$B_2O_3$ 0, 1 - 25%,
$Al_2O_3$ 2 - 20%,
$Li_2O$ 0 - moins de 0,1%,
$Na_2O$ 0 - moins de 0,1%,
$K_2O$ 0 - moins de 0,1%,
$Li_2O + Na_2O + K_2O$ 0 - moins de 0,1%,
MgO 0 - 20%,
CaO 0 - 20%,
SrO 0 - 30%,
BaO 0 - 30%,
MgO + CaO, + SrO + BaO 3 - 45%,
ZnO 0 - 25%,
$TiO_2$ 0 - 15%,
$WO_3$ 0 - 15%,
$CeO_2$ 0 - 5%,
$TiO_2 + WO_3 + CeO_2$ 0, 1 - 15%,
$ZrO_2$ 0 - 9%,
$SnO_2$ 0 - 10%,
$Nb_2O_5$ 0 - 15%,
$Ta_2O_5$ 0 - 15%,
$P_2O_5$ 0 - 10%,
$Bi_2O_3$ 0 - 30%,
$Cl_2$ 0 - 0,5%, et
$Sb_2O_3$ 0 - 1% ;
mise en forme tubulaire du verre fondu par un processus d'étirage de tube.

[FIG. 1]

（a）

（b）

[FIG. 2]

[FIG. 3]

(a)

5
2
3
10
4
3
2
1

(b)

2  4  3  5  11
1  3  6  2  7

(c)

2  4  3  5
1  3  6  2  7

(d)

2  4  3
1  3  6  2  5

[FIG. 4]

(a)

(b)

(c)

(d)

(e)

[FIG. 5]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20028408 A
- US 3903353 A

- US 20020117959 A

**Non-patent literature cited in the description**

- *Journal of Lighting Society,* 2003, vol. 87 (1), 18